# EUROPEAN PATENT APPLICATION

(11) **EP 1 759 858 A1**
(43) Date of publication of application: **07.03.2007**
(21) Application number: 06254505.8
(22) Date of filing: 30.08.2006
(51) Int. Cl.: B41J 2/21, C09D 11/00

(54) **Ink-jet image forming method**

(30) Priority: 02.09.2005 JP 2005254555
(71) Applicant: Konica Minolta Photo Imaging, Inc., Shinjuku-ku, Tokyo 163-0512 (JP)
(72) Inventor: Itoh, Hiroaki, 1 Sakura-machi Hino-shi Tokyo 191-8511 (JP); Nojima, Takahiko, 1 Sakura-machi Hino-shi Tokyo 191-8511 (JP)
(74) Representative: McCluskie, Gail Wilson

(57) **Abstract**

A method of forming an ink-jet image comprising the steps of: i. ejecting ink compositions from an ink-jet head onto a recording medium; and ii. forming an image,
wherein a) the recording medium is a porous type medium having a porous ink absorbing layer on a non-water absorptive support, b) the ink-jet head has a plurality of nozzles which eject more than two ink compositions respectively, and one ink composition is a clear ink, and one ink composition is a color ink, c) the clear ink contains water dispersible microscopic resin particles having an average diameter of 10 - 200 nm of more than 1 weight%, and d) pH of the ink compositions is 6.5 - 11.0, and an absolute value of a difference, between an ink composition pH and film surface pH of the recording medium, is less than 4.0.

## Description

This application is based on Japanese Patent Application No. 2005-254555 filed on Sep. 02, 2005, in Japanese Patent Office, the entire content of which is hereby incorporated by reference.

### FIELD OF THE INVENTION

The present invention relates to an ink-jet image forming method in which a clear ink, containing microscopic resin particles, is ejected onto a porous type ink-jet recording medium with an ink-jet recording method, and specifically in detail, relates to an ink-jet image forming method to form a highly glossy and highly dense color image exhibiting high weather resistance.

### BACKGROUND OF THE INVENTION

An ink-jet print system is inferior, specifically in image storage stability and feeling of glossiness, compared to silver halide photography. Specifically problematic in image storage stability is ozone fading due to ozone and NOx in the atmosphere. Means to decrease ozone fading are described in, for example, Unexamined Japanese Patent Application Publication No. (hereinafter, referred to as JP-A) 63-252780, 64-11877, 1-108083, 1-216881, 1-218882, 1-258980, 2-188287, 7-237348, 7-266689, and 8-164664. However, to achieve high ink absorbability required in recent high speed printers, a so-called porous type ink-jet recording medium is essential as an ink-jet recording medium, but this porous type ink-jet recording medium has the drawback that gases can easily penetrate into the porous layer. Thus, desired is development of a radical solution of these problems.

As one means to overcome the above gas fading such ass ozone fading, known are water dispersible microscopic resin particles (hereinafter, referred to as latex or latex microparticles) which can be added to the ink. For example, disclosed is a technology to form an impermeable gas barrier layer on the ink-jet recording medium after printing by incorporating microscopic resin particles or latex microparticles in the ink. (Please refer, for example, to Patent Document 1.) Further, for the purpose of enhanced image storage stability or enhanced glossiness, proposed is a technology to provide a colorless solution containing microscopic resin particles onto the areas where a colored ink is to be deposited. (Please refer, for example, to Patent Documents 2 and 3.) Furthermore, in these high weather resistance technologies employing microscopic resin particles, proposed have been not only ink technologies, but also technologies which combine the ink and the ink-jet recording medium to achieve the targeted function. An ink-jet recording method and a printing medium are disclosed, for example, penetration of gases such as ozone is prevented by formation of a resin barrier layer after printing with dispersed microscopic resin particles into a colored ink containing a water-soluble dye, while enhanced are ozone resistance and coloring property are enhanced by increased fixing capability with control of the surface pH of the porous type recording medium to 5.5 - 7.5 (please refer to, Patent Document 4). Further, disclosed is a technology which balances high ink absorbability and ozone resistance, which are achieved not only by formation of a gas barrier layer but also control both the particle diameter of microscopic resin particles in the ink, and the pore size within the porous type ink-jet recording medium (please refer to Patent Document 5). Further disclosed is a method providing dramatically enhanced ozone resistance due to a uniformly formed gas barrier layer, which is achieved by printing of a colorless ink in reverse portions specifically from the color of the medium to low density areas, with a newly introduced substantially clear ink composition containing no coloring agents, in addition to microscopic resin particles in the colored ink (please refer, for example, to Patent Document 6).

However, the methods incorporating the above Patent Documents, can provide a certain degree of desired effects with respect to oxidizing gas resistance, but it was learned that these methods have a serious drawback of significantly reduced gas resistance because of layer destruction together with lowered glossiness due to effects of heat and humidity over long term storage, even under a benign environment. Further, high glossiness similar to that of silver halide prints can be obtained by covering the surface of the porous type recording medium with a resin layer, however, it was learned that the transparency is drastically decreased due to aggregation of coloring agents and microscopic resin particles, resulting in decreased coloring. Thus, desired is urgent development of improved results.
Patent Document 1: JP-A 2004-50545
Patent Document 2: WO No. 00/06390
Patent Document 1: JP-A 2001-39006
Patent Document 1: JP-A 2005-125585
Patent Document 1: JP-A 2004-50545
Patent Document 1: JP-A 2005-88411

### SUMMARY OF THE INVENTION

The present invention was achieved in view of the above situation, and an object of this invention is to provide an ink-jet image forming method (or, a method to form an ink-jet image), by which it is possible to form an image exhibiting excellent weather resistance, and a high glossy and high density color image without decrease of ink absorbability, and specifically to provide the ink-jet image forming method to solve the trade-off between filming capability contributing to ozone gas resistance and the sense of glossiness, as well as storage stability such as reduction of layer destruction over long-term storage under the environment of high temperature and high humidity, in which a functional layer is formed on the surface of the porous type ink-jet recording medium with a film formed of microscopic resin particles.

The above object of this invention can be accomplished by the following embodiments.

Item (1) A method of forming an ink-jet image comprising the steps of:
i. ejecting ink compositions from an ink-jet head onto an ink-jet recording medium; and
ii. forming an image,

wherein a) the ink-jet recording medium is a porous type recording medium which has at least one layer of a porous ink absorbing layer on a non-water absorptive support,
b) the ink-jet head has a plurality of nozzles which eject more than two ink compositions respectively, and at least one ink composition is a clear ink containing substantially no coloring agent, and also at least one ink composition is a color ink containing a coloring agent,
c) the clear ink contains water dispersible microscopic resin particles having an average diameter of not less than 10 nm and not more than 200 nm in an amount of not less than 1 weight%, and
d) pH of the ink compositions is not less than 6.5 and not more than 11.0, and also an absolute value of a difference, between pH of the ink compositions and film surface pH of the ink-jet recording medium, is less than 4.0.

Item (2) The method of forming an ink-jet image of above Item (1), wherein a glass transition temperature Tg of microscopic resin particles contained in the clear ink is not less than -30 °C and not more than 10 ° C.

Item (3) The method of forming an ink-jet image of above Item (1) or (2), wherein the microscopic resin particles are of an anion modified latex.

Item (4) The method of forming an ink-jet image of any one of above Items (1) - (3), wherein thickness of the an outermost layer which is located at the position farthest from the non-water absorptive support is not more than 10.0 µm, and the outermost layer is a non-mordant layer containing substantially no mordant.

Item (5) The method of forming an ink-jet image of above Item (4), wherein the outermost layer contains colloidal silica exhibiting an average diameter of the particles of not less than 10 nm and not more than 100 nm.

In addition to the above general embodiments, more preferable embodiments will be described below.

Item (6) The method of forming an ink-jet image of any one of above Items (1) - (5), wherein the coloring agent contained in the color ink is a water-soluble coloring agent.

Item (7) The method of forming an ink-jet image of any one of above Items (1) - (6), wherein the clear ink is ejected a uniform thickness of not less than 350 nm of a resin film with microscopic resin particles after film formation, based on the ejected amount of the color ink onto the porous type ink-jet recording medium.

According to the present invention, it is possible to provide a method of forming an ink-jet image which exhibits excellent weather resistance, and a highly glossy and highly dense color image without a decrease of ink absorbability, and also to provide a method by which initial filming capability contributing to ozone gas resistance and tectile sense of glossiness, and storage stability such as reduction of layer destruction over long-term storage under an environment of high temperature and high humidity.

### BRIEF DESCRIPTION OF THE DRAWINGS

Embodiments will now be described, by way of example only, with reference to the accompanying drawings which are meant to be exemplary, not limiting and wherein like elements numbered alike in several Figures, in which:

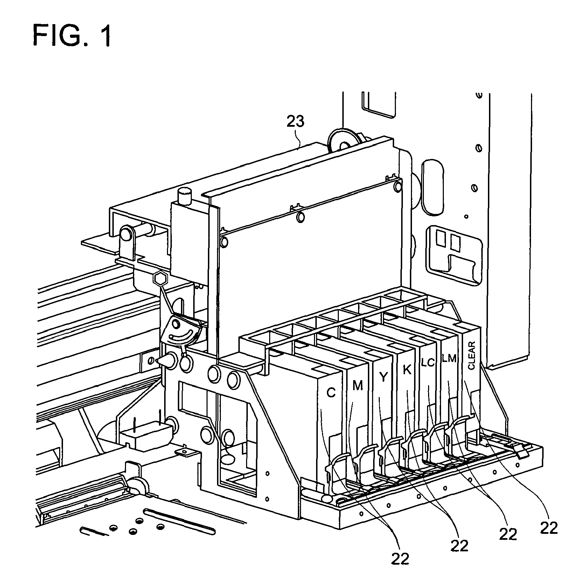

Fig. 1 is an oblique perspective view of an example of an ink-jet printer employable in the ink-jet recording method of this invention.

### PREFERABLE EMBODIMENTS OF THIS INVENTION

It should be understood that no single element of any of the embodiments described herein is essential, and that it is within the contemplation of the invention that one or more elements (or method steps) of one or more embodiments of the invention as described herein may be omitted or their functionality may be combined with that of other elements as a general matter of design choice.

As a results of diligent study in view of the above problems, the inventors of the present invention experimented and achieved this invention. Via a method of forming an ink-jet image comprising the steps of: i. ejecting ink compositions from an ink-jet head onto an ink-jet recording medium; and ii. forming an image, wherein a) the ink-jet recording medium is a porous type recording medium which has at least one layer of a porous ink absorbing layer on a non-water absorptive support, b) the ink-jet head has a plurality of nozzles which eject more than two ink compositions respectively, and at least one ink composition is a clear ink containing substantially no coloring agent, and also at least one ink composition is a color ink containing a coloring agent, c) the clear ink contains water dispersible microscopic resin particles having an average diameter of not less than 10 nm and not more than 200 nm in an amount of not less than 1 weight%, and d) pH of the ink compositions is not less than 6.5 and not more than 11.0, and also an absolute value of the difference between pH of the ink compositions and film surface pH of the ink-jet recording medium is less than 4.0, it is possible to provide a method of forming an ink-jet image which exhibits excellent weather resistance, and a highly glossy and highly dense color image without a decrease of ink absorbability, and also to provide a method by which initial filming capability contributing to ozone gas resistance and tactile sense of glossiness, and storage stability such as reduction of layer destruction over long-term storage under a concomitant environment of high temperature and high humidity.

An ink-jet image forming method of this invention will be detailed below.

Firstly, an ink composition of this invention will be described.

### Clear ink

In an ink-jet image forming method of this invention, at least one ink composition is a clear ink containing substantially no coloring agent, but contains water dispersible microscopic resin particles of an average particle diameter of 10 - 200 nm in an amount of more than 1 weight%.

The clear ink of this invention is mainly comprised of water dispersible microscopic resin particles and a liquid medium, and preferably comprises water dispersible microscopic resin particles, a water-soluble solvent, and water.

As microscopic resin particles employable in this invention, there is no specific limitation as long as it provides the desired effects of this invention. For example, it may be a water-soluble resin or a water insoluble resin, but to more effectively provide the desired effects of this invention, preferable is a water insoluble resin dispersed in water, but more preferable is an anion modified latex.

Specific examples of resin comprising microscopic resin particles preferably include acrylonitrile; styrene; acrylates (such as acrylic acid, methyl acrylate, ethyl acrylate, butyl acrylate, 2-hydroxyethyl acrylate, 2-ethylhexyl acrylate, glycidyl acrylate, methacrylic acid, methyl methacrylate, and butyl methacrylate); vinyl acetate; butadiene; vinyl chloride; polyvinylidene chloride; silicone; olefin (such as ethylene, and propylene); and a copolymer combined more than two kinds of these monomers. Further, employable resins are preferably ones which contain fewer residual components from the viewpoint of odder and safety, and the added amount is preferably not more than 3 weight% compared to the solid weight of the copolymer, more preferably not more than 1 weight%, and still more preferably not more than 0.1 weight%.

The microscopic resin particles of this invention are preferably characterized by an average particle diameter of 10 - 200 nm, more preferably 30 -150 nm, but most preferably 30 - 100 nm. In cases when the average particle diameter is not less than 10 nm, the microscopic resin particles do not permeate into the interior of the porous layer of the porous type ink-jet recording medium (hereinafter, referred to as ink-jet recording medium or simply as recording medium), and the resin particles existing on the surface of the porous layer, from the viewpoint of glossiness. Further, since when the average diameter is not less than 30 nm, the resin particles cannot enter into the fine pores of the ink-jet recording medium, resulting in it being preferable due to superior ink absorbability during high speed printing. Further, when the average particle diameter of the microscopic resin particles is not more than 200 nm, it becomes advantageous in the leveling property on the surface of the porous layer due to the microscopic resin particles being small in some degree, resulting in it being preferable in terms of glossiness.

The average particle diameter of the microscopic resin particles of this invention is easily determined by employing a commercially available particle size measuring device which employs a light scattering method or a laser Doppler method, such as Zetasizer 1000 (manufactured by Malvern Instruments, Ltd.)

The microscopic resin particles employable in this invention exhibit a glass transition temperature (Tg) of -60 to 60 °C, but from the viewpoint of simultaneous initial filming property and stability over long-term storage, preferred is about -40 to 20 °C, but more preferred is in the range of -30 to 10 °C, to fully exhibit the targeted effects of this invention.

In a concentration filming process after the ink is deposited onto the ink-jet recording medium, generally a minimum filming temperature (hereinafter, also referred to as MFT) is preferably so as to be low, which contributes to film strength after film formation. It is preferable so that the difference between a drying temperature and a MFT during film formation is high for better film performance. With respect to the microscopic resin particles of this invention, if their MTF is in the range of -30 to 30 °C, the resin particles are employable, but a preferable MTF is -40 to 10 °C, while more preferable is -30 to 0 °C from the viewpoint of filming property and long term storage stability of the formed protective layer.

The MFT is a parameter depending on Tg, and generally the MFT tends to be low so as to be compatible with low Tg microscopic resin particles, but by control of dispersibility of the microscopic resin particles, adjustment, to some extent, of the MFT is possible. In this invention, an auxiliary filming agent may be added to control the MFT of the microscopic resin particles. An auxiliary filming agent is sometimes referred to as a plasticizing agent, which is an organic compound to lower the MFT of the microscopic resin particles.

Similarly as a method to control the MFT, the microscopic resin particles can be modified with an anionic group, such as a carboxylic group, and dispersion capability of the modified microscopic resin particles is enhanced by raising the pH, resulting in the desired effect of a lowered apparent MFT.

The clear ink of this invention is characterized by containing microscopic resin particles, however, the color ink of this invention may also contain the microscopic resin particles similar to the above-cited microscopic resin particles, other than those of the clear ink.

The clear ink of this invention contains substantially no coloring agent, which means that the clear ink exhibits substantially no function of an image recording ink solution, but the "clear ink" may be slightly colored to serve other functions, such as confirming of its remaining amount, tone controlling (of a white background) when printing on a white background, confirmation of ejection stability, and enhancement of weather resistance.

The clear ink of this invention may contain the microscopic resin particles in an amount of 0.1 - 50.0 weight%, preferably 1 - 20 weight%, and more preferably 1 - 10 weight% from the viewpoint of dispersibility and performance of after film formation. Further, the clear ink may contain a water-soluble solution (such as water or a water-soluble solvent) in the amount of 1 - 50 weight%, and if appropriate, may contain various functional compounds, such as a surface active agent, an ultraviolet absorbing agent, an anti-oxidizing agent, and a fungicide. An organic solvent, a surface active agent and other additives which nay be added to the clear ink of this invention include similar additives which may be added to the color ink containing a coloring agent, to be explained later.

Further, from the viewpoint of obtaining highly uniform glossiness, when the clear ink of this invention is ejected onto the ink-jet recording medium, it is preferable to provide the clear ink uniformly at a thickness of more than 350 nm after formation of film of the microscopic resin particles, based on the provided amount of the color ink. In cases when the thickness of the resin film is more than 350 nm, a sufficient gas barrier property is enabled, and at the same time film formation with high uniformity is also enabled, resulting in a high tactile sense of glossiness.

The clear ink and the color ink of this invention exhibit a surface tension of not more than 40 mN/m to provide stable ejection, high glossiness, and enhanced ozone resistance, but is more preferably in the range of 20 - 40 mN/m. Fot the same reason, viscosity of the inks is preferably 1.5 - 10 mPa·s, but is more preferably 3.0 - 8.0 mPa·s.

### Color Ink

The ink-jet recording method of this invention, is characterized in that at least one kind of the ink composition is a color ink containing a coloring agent. As a coloring agent, listed may be a pigment or a dye, but preferable is a water-soluble coloring agent. In this invention, as a water-soluble coloring agent contained in the color ink, a water-soluble dye is preferable.

The color ink of this invention comprising a water-soluble dye is a mixture of a water-soluble dye employed as a coloring agent, and water or a highly water-miscible organic solvent.

Employable dyes in this invention include acid dyes, direct dyes and basic dyes, whereby water solubility is enhanced by introduction of a sulfo group or a carboxy group into an azo based dye, a xanthene based dye, a phthalocyanine based dye, a quinine based dye, and an anthraquinone based dye, all of which are well known in the art.

As a water-soluble dye employable in this invention, listed may, for example, be an azo dye, a methine dye, azomethine dye, a xanthene dye, phthalocyanine dye, triphenylmethane dye, and a diphenylmethane dye, the specific compounds of which are shown below. But this invention is not limited to these exemplified compounds.
C. I. Acid Yellow: 1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, and 246
C. I. Acid Orange: 3, 7, 8, 10, 19, 24, 51, 56, 67, 74, 80, 86, 87, 88, 89, 94,95, 107, 108, 116, 122, 127, 140, 142, 144, 149, 152, 156, 162, 166, and 168
C. I. Acid Red: 1, 6, 8, 9, 13, 18, 27, 35, 37, 52, 54, 57, 73, 82, 88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, and 415
C. I. Acid Blue: 1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, and 350
C. I. Acid Green: 9, 12, 16, 19, 20, 25, 27, 28, 40, 43, 56, 73, 81, 84, 104, 108, and 109
C. I. Acid Brown: 2, 4, 13, 14, 19, 28, 44, 123, 124, 224, 226, 227, 248, 282, 283, 289, 294, 297, 298, 301, 355, 357, and 413
C. I. Acid Black: 1, 2, 3, 24, 26, 31, 50, 52, 58, 60, 63, 107, 109, 112, 119, 132, 140, 155, 172, 187, 188, 194, 207, and 222
C. I. Direct Yellow: 8, 9, 10, 11, 12, 22, 27, 28, 39, 44, 50, 58, 86, 87, 98, 105, 106, 130, 132, 137, 142, 147, and 153
C. I. Direct Orange: 6, 26, 27, 34, 39, 40, 46, 102, 105, 107, and 118
C. I. Direct Red: 2, 4, 9, 23, 21, 31, 54, 62, 69, 79, 80, 81, 83, 84, 89, 95, 212, 224, 225, 226, 227, 239, 242, and 254
C. I. Direct Violet: 9, 35, 51, 66, 94, and 95
C. I. Direct Blue: 1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, and 291
C. I. Direct Green: 26, 28, 59, 80, and 85
C. I. Direct Brown: 44, 106, 115, 195, 209, 210, 222, and 223
C. I. Direct Black: 17, 19, 22, 32, 51, 62, 108, 112, 113, 117, 118, 132, 146, 154, 159, and 169
C. I. Basic Yellow: 1, 2, 11, 13, 15, 19, 21, 28, 29, 32, 36, 40, 41, 45, 51, 63, 67, 70, 73, and 91
C. I. Basic Orange: 2, 21, and 22
C. I. Basic Red: 1, 2, 12, 13, 14, 15, 18, 23, 24, 27, 29, 35, 36, 46, 51, 52, 60, 70, 73, 82, and 109
C. I. Basic Violet: 1, 3, 7, 10, 11, 15, 16, 21, 27, and 39
C.I. Basic Blue: 1, 3, 7, 9, 21, 22, 26, 41, 45, 47, 52, 54, 65, 69, 75, 77, 92, 100, 105, 117, 124, 129, 147, and 151
C. I. Basic Green: 1, and 4
C. I. Basic Brown: 1
C. I. Reactive Yellow: 2, 3, 7, 15, 17, 18, 22, 23, 24, 25, 27,37, 39, 42, 57, 69, 76, 81, 84, 85, 86, 87, 92, 95, 102, 105, 111, 125, 135, 136, 137, 142, 143, 145, 151, 160, 161, 165, 167, 168, 175, and 176
C. I. Reactive Orange: 1, 4, 5, 7, 11, 12, 13, 15, 16, 20, 30, 35, 56, 64, 67, 69 70, 72, 74, 82, 84, 86, 87, 91, 92, 93, 95, and 107
   C. I. Reactive Red: 2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, and 235
C. I. Reactive Violet: 1, 2, 4, 5, 6, 22, 23, 33, 36, and 38
C. I. Reactive Blue: 2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, and 236
C. I. Reactive Green: 8, 12, 15, 19, and 21
C. I. Reactive Brown: 2, 7, 9, 10, 11, 17, 18, 19, 21, 23, 31, 37, 43, and 46
C. I. Reactive Black: 5, 8, 13, 14, 31, 34, and 39 These dyes listed above are described in Senshoku Noto 21 han (Dyeing Note 21^{st} Edition), published by Shikisensha Co., Ltd.

On the other hand, the pigments employable in the color ink of this invention include inorganic or organic pigments which are well known in the art for ink-jet. For example, listed are organic pigments, such as azo pigments e.g. an azo lake pigment, an insoluble pigment, a condensed azo pigment, and a chelate pigment; polycyclic pigments e.g. a phthalocyanine pigment, perylene and a perylene pigment, an anthraquinone pigment, a quinacridone pigment, a dioxazine pigment, a thioindigo pigment, an isoindolinone pigment, and a quinophthaloni pigment; dye lakes e.g. an acid dye type lake; nitro pigments; nitroso pigments; aniline black; and daylight fluorescent pigments; and inorganic pigments such as carbon black.

Specific organic pigments are exemplified below.

The pigments for magenta or red include C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48 : 1, C. I. Pigment Red 53 : 1, C. I. Pigment Red 57 : 1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, and C. I. Pigment Red 222.

The pigments for orange or yellow include C. I. Pigment Orange 31, the C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 93, C. I. Pigment Yellow 94, C. I. Pigment Yellow 128, and C. I. Pigment Yellow 138.

The pigments for green or cyan include C. I. Pigment Blue 15, C. I. Pigment Blue 15 : 2, C. I. Pigment Blue 15 : 3, C. I. Pigment Blue 16, C. I. Pigment Blue 60, and C.I. Pigment Green 7.

The concentration of above dyes and pigments in the color ink is dependant on the kinds of employed dyes and pigments and ink configuration (whether deep or light inks are employed or not), and further the kinds of paper sheets to be printed, which is generally 0.2 - 10 weight%.

In the color ink of this invention, a water-soluble solvent is preferably employed, and as such, mixed solvents, such as water and a water-soluble organic solvent, are more preferably employed. As preferably employed examples of the water-soluble organic solvent, listed are alcohols (for example, methanol, ethanol, propanol, and isopropanol, butanol, isobutanol, secondary butanol, and tertiary butanol); polyhydric alcohols (for example, ethylene glycol, diethylene glycol, triethylene glycol, polyethylene glycol, propylene glycol, dipropylene glycol, polypropylene glycol, butylene glycol, hexane diol, pentane diol, glycerine, hexane triol, and thiodiglycol); polyhydric alcohol ethers (for example, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether); amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine); amides (for example, formamide, N,N-dimethylformamide, and N,N-dimethylacetamide); heterocycles (for example, 2-pyrrolidone, N-methyl-2-pyrrolidone, cyclohexyl pyrrolidone, 2-oxazolidone, and 1,3-dimethyl-2-imidazolidinone); and sulfoxides (for example, dimethyl sulfoxide).

Further, various surface active agents may be employed in the above-cited color ink to enhance permeability of an ink solvent, and other reasons. As such surface active agents, anionic or nonionic surface active agents are preferably employed. Of these, an acetylene glycol system surface active agents are specifically preferable.

Further, in the color ink of this invention, similar microscopic resin particles as employed in the foregoing clear ink may be incorporated. As microscopic resin particles employed in the color ink, although there is no particular limitation, it is preferable to employ similar resin particles employed in the clear ink.

In the color ink of this invention, if appropriate, ejection stability, print head and ink-jet cartridge compatibility, storage stability, stored image stability, and enhancement of other performance characteristics, various well-known additives, for example, a viscosity modifier, a surface tension adjuster, a specific-resistance regulator, a film-forming agent, a dispersing agent, a surface active agent, an ultraviolet ray absorbing agent, an anti-oxidizing agent, an anti-discoloring agent, an anti-oxidizing agent, a fungicide, and a rust inhibiting agent, are appropriately selected and employed. For example, listed are microscopic oil droplets such as liquid paraffin, dioctyl phthalate, tricresyl phosphate, and silicone oil; various surface active agents, such as cationic or nonionic ones; ultraviolet ray absorbing agents, the latter of which are described in JP-A Nos. 57-74193, 57-87988, and 62-261476; anti-discoloring agents described in JP-A Nos. JP-A Nos. 57-74192, 57-87989, 60-72785, 61-146591, 1-95091, and 3-13376; fluorescent brightening agents described in JP-A Nos. 59-42993, 59-52689, 62-280069, 61-242871, and 4-219266; pH adjusters such as sulfuric acid, phosphoric acid, citric acid, sodium hydroxide, potassium hydroxide, and potassium carbonate. pH of Ink Composition

In the above ink compositions (being color inks and the clear ink) of this invention, one of the characteristics is that the pH is 6.5 or more and 11.0 or less. In addition, in the ink-jet image forming method of this invention, a characteristic is the difference of the pH of the ink composition and the film surface pH of the ink-jet recording medium being less than 4.0.

As a pH controlling method of the ink composition of this invention, to remain in the above-mentioned range specified by this invention, addition of a pH adjuster is preferably employed in the ink, for which it is preferred to employ alkylamine and alkanolamines as pH adjusters in the ink compositions. A pH adjuster has an effect which controls the rapid change of the ink pH, when the ink is deposited onto the recording medium. This effect is not exhibited in the existence of a coloring agent, but can preferably control precipitation caused by an interaction of the components contained in the recording medium and the microscopic resin particles during ink deposition, and also decreases coarse aggregation by incorporation of the above-cited amines in the ink compositions. As specifically applicable alkylamines, cited are triethylamine, diethylamine, monoethylamine, and dimethyl ethylamine. Further, as alkanolamines, cited are triethanolamine, diethanolamine, monoethanolamine, and dimethylethanolamine.

Further, pH adjustment can also be conducted by appropriate combination of various acids or alkalis. As acids, for example, employed may be inorganic acid, such as hydrochloric acid, nitric acid, sulfuric acid, and phosphoric acid; as well as organic acids, such as acetic acid, citric acid, and succinic acid. As alkalis, for example, employed may be sodium hydroxide, potassium hydroxide, calcium hydroxide, aqueous ammonia, potassium carbonate, sodium carbonate, and trisodium phosphate.

As for pH of the ink compositions, 6.5 - 11.0 is preferable from the viewpoint of stability of the coloring agent, and the dispersion stability of the microscopic resin particles, while pH 7.0 - 11.0 is more preferable, but pH 8.0 - 11.0 is still more preferable to provide the desired effects of this invention. However, there is no requirement that pH is similarly adjusted by the existence of and color of the coloring agents.

### Configuration of Ink Compositions

Further, in order to exhibit the targeted effects of this invention, it is common in this industry and important to employ an ink set of color inks, which has at least two kinds of differing coloring agent concentrations, for deep and light color for the purpose of not only ink absorbency but also enhancement of gradation as conventionally developed photo-grade image quality. Further, in order to obtain color reproduction and expansion of the color reproduction range, widely employed in practice are special color inks to achieve a high level of photo-grade quality. It is preferable to apply the embodiments of this invention to these deep and light inks and other special color inks to obtain the desired effects. Further, these embodiments may be similarly applied to ink sets to form a transparent overcoat layer containing no coloring agent.

### Ink-jet Recording Medium

The ink jet recording medium employed in this invention is suitable for an ink-jet recording method, and has a porous ink absorptive layer on at least one surface of a non-water absorptive support.

As a non-water absorptive support which is preferably employed in this invention, there are a transparent support and an opaque support.

Listed as a transparent support, for example, are films of polyester system resin, diacetate system resin, triacetate system resin, acrylic system resin, polycarbonate system resin, polyvinylchloride system resin, polyimide system resin, cellophane, and celluloid. Of these, it is preferable to exhibit the characteristics of tolerating the radiant heat when used as a medium for overhead projectors, for which polyethylene terephthalate is specifically preferable. Thickness of such transparent support is preferably 50 - 200 µm.

On the other hand, as an opaque support, employed may be, for example, a resin coated paper (being a so-called RC paper) which has a polyolefin resin coated layer on one side of the base paper incorporating a white pigment, and an opaque resin film which incorporates a white pigment such as barium sulfate and titanium oxide in polyolefins (such as polyethylene and polypropylene) or polyethylene terephthalate, or a complex film support which is formed as a paste of more than two of them.

Although the thickness of such various opaque supports may change extensively depending on the application, it is generally in the range of 60 - 300 µm.

It is preferable to conduct a corona discharge treatment or a sub-coating treatment with gelatin or other hydrophilic polymers or a hydrophobic polymer onto the surface of the support in advance of the application of an ink absorptive layer, in order to enhance adhesion strength between the various above-cited supports and the ink absorptive layer. Further, the ink-jet recording medium of this invention does not necessarily need to be transparent or white, but may be a tinted recording medium.

As a non-water absorptive support employed for the ink-jet recording medium of this invention, it is specifically preferable to employ a paper support, both surfaces of which are laminated with polyethylene, because quality of the recorded picture image is close to that of conventional photographic images, and further a high quality image is obtained at relatively low cost.

The appropriate paper support of this invention, which is laminated with polyethylene, is described below.

The base paper employed for the paper support employs a wood pulp as the main raw material, and in addition to a wood pulp, paper making is carried out employing synthetic pulps such as polypropylene, or synthetic fibers, such as nylon or polyester, if beneficial. As a wood pulp, any of LBKP, LBSP, NBKP, NBSP, LDP, NDP, LUKP and NUKP may be employed, but it is preferable to employ LBKP, NBSP, LBSP, NDP, and LDP at a higher ratio, which contain more short-fiber components. However, the ratio of LBSP and/or LDP is preferably in the range of 10 - 70 weight%.

As the above pulp, a chemical pulp with little impurity (such as a sulfate pulp and a sulfite pulp) is preferably employed, and further, a pulp with enhanced whiteness by a bleaching treatment is also beneficial.

To a base paper, appropriately added may be a sizing agent, such as a higher fatty acid and an alkyl ketene dimer; a white pigment, such as calcium carbonate, talc, and a titanium oxide; a paper strengthening agent, such as starch, polyacrylamide, and polyvinyl alcohol; a fluorescent brightening agent; a water-retaining agent, such as polyethylene glycol; a dispersing agent; and a softening agent, such as quaternary ammonium.

The beating degree of the pulp to be employed for paper making is preferably from 200 - 500 ml based on CSF.
Further, as to the fiber length of the pulp after beating, it is preferable that the total of 24-mesh remaining ingredients and 42-mesh remaining ingredients defined by JIS-P-8207 is from 30 - 70% by weight. The 4-mesh remaining ingredients are preferably not more than 20% by weight.

The basis weight of the base paper is preferably 40 - 250 g, and specifically more preferably 60 - 220 g. The thickness of the base paper is preferably 40 - 250 µm.

The raw paper may be treated to high smoothness by calendering in the course of or after the paper making. The density of the base paper is usually 0.7 - 1.2 g/m² (according to JIS-P-8118), while the stiffness of the base paper is preferably 20 - 200 g according to the conditions defined by JIS-P-8143.

A surface sizing agent may be coated onto the surface of the base paper. As such a surface sizing agent, the same sizing agent as added to the foregoing base paper may be employed.

The pH of the base paper is preferably 5 - 9 when the pH is measured by the hot water extraction method defined in JIS-P-8113.

Although polyethylene covering both surfaces of the base paper is composed mainly of low density polyethylene (LDPE) and/or high density polyethylene (HDPE), alternatively LLDPE (linear low density polyethylene) or polypropylene may also be employed to a degree. Specifically, the polyethylene layer on the ink absorbing layer side is preferably one containing rutile or anatase type titanium oxide to improve opacity and whiteness of the polyethylene layer such as, is widely employed for commercial photographic paper. The content of titanium oxide to polyethylene is usually 3 - 20 weight%, and preferably 4 - 13 weight%.

The polyethylene cover paper may be subjected to a slight surface roughening treatment so as to enhance adhesion and coating characteristics of the ink absorptive layer. In this case, the slight surface roughening treatment is preferably conducted to obtain surface roughness Ra in the range of about 0.10-0.25 µm. In the above polyethylene cover paper, it is specifically preferable to maintain the moisture content of the paper, which is a base material, at 3 - 10 wt%.

The targeted stiffness is obtained by appropriate selection of thickness of the above base paper, because the stiffness of such non-water absorptive support depends mainly on the thickness of the base paper.

Further, curling of the base paper is an important characteristic for determination of the curling characteristics of the recording medium provided with the ink absorptive layer, and the optimum curling balance is obtained in combination with the ink absorptive layer. In the recording medium of this invention, the ink absorptive layer of which is a porous type ink absorptive layer, it is preferable that the curling characteristic is generally designed as minus curling (being that the four corners of the base paper are lifted up when the base paper is so placed that the ink absorptive layer side faces down). Although design of curling resistance of a base paper is determined by its relation with the ink absorptive layer, when A4 size base paper is placed for 1 hour at 23 °C and 20 - 80% RH, it is preferable to make the average of the height of the four raised corners be in the range of -5 to -50 mm.

Next, the porous ink absorptive layer prepared on the above-cited non-water absorptive support will be described.

The porous type ink absorptive layer may be only on one, or on both sides of the support. In cases when an ink absorptive layer is provided on both sides of the support, composition and thickness of the layers may be the same or differ. Further, the ink absorptive layer may consist of a monolayer or of plural layers.

The porous ink absorptive layer provided in the ink-jet recording medium of this invention preferably contains mainly a hydrophilic binder and microscopic inorganic particles.

As microscopic inorganic particles, listed are, for example, white microscopic inorganic particles such as precipitated calcium carbonate, heavy calcium carbonate, magnesium carbonate, kaolin, clay, talc, calcium sulfate, barium sulfate, titanium dioxide, zinc oxide, zinc hydroxide, zinc sulfide, zinc carbonate, hydrotalcite, aluminum silicate, diatomaceous earth, calcium silicate, magnesium silicate, synthetic amorphous silica, colloidal silica, alumina, colloidal alumina, pseudo boehmite, aluminum hydroxide, lithopone, zeolite, and magnesium hydroxide. The above microscopic inorganic particles may be employed as primary particles or secondary aggregated particles.

In this invention, from the aspect of obtaining a high-quality print on the ink-jet recording medium, and also obtaining particles of low refractive index and an average particle diameter of less than about 0.1 µm at relatively low cost, silica system particles or alumina system particles are preferable, and further, alumina, pseudo boehmite, colloidal silica, and the silica microparticles synthesized with a gas phase method are more preferable, but specifically preferable are silica microparticles synthesized with a gas phase method. The surface of the silica microparticles may be subjected to modification with aluminum. The content of the silica microparticles modified with aluminum is preferably 0.05 - 5% by weight compared to silica.

The average particle diameter of primary particles of the above microscopic inorganic particles is preferably at most 200 nm, from the aspect of glossiness and coloring density, and is specifically preferably at most 100 nm. The lower limit of the average particle diameter is not specifically restricted, but it is preferably at least about 10 nm, from the aspect of production of microscopic inorganic particles.

The average particle diameter of the microscopic inorganic particles may be calculated as follows. The particles in the cross-section or on the surface of a porous layer, are observed employing an electron microscope, and the diameter of 100 randomly selected particles is so determined. The simple average (the numerical average) is obtained as the diameter of the particles based on the determined diameter. Herein, each particle diameter is represented by the diameter of a circle having the same projection area as that of the particle.

The above microscopic inorganic particles may exist in the porous layer as primary particles, as secondary particles, or more highly aggregated particles, however, the above-cited average particle diameter is the particle diameter of particles formed independently in the porous layer, when the particles are observed with an electron microscope.

In cases when the above-cited microscopic inorganic particles are the high degree aggregated particles more than secondary particles, the average primary particle diameter is less than the average particle diameter observed in the porous layer, and the primary particle diameter of the microscopic inorganic particles is preferably at most 50 nm, more preferably at most 30 nm, and still more preferably 4 - 20 nm.

The content of the above microscopic inorganic particles in the water-soluble coating solution for the ink absorptive layer is generally about 5 - 40 wt%, but is more preferably 7 - 30 wt%. The above microscopic inorganic particles are desired to form a porous type ink absorptive layer exhibiting sufficient ink absorbability and less cracking in the layer, and thus, the coated amount in the ink absorptive layer is preferably 5 - 50 g/m², but more preferably 10 - 30 g/m².

As a hydrophilic binder incorporated in the porous type ink absorptive layer, there is no specific limitation, and a conventionally well-known hydrophilic binder may be employed, such as for example, gelatin, polyvinyl pyrrolidone, polyethylene oxide, polyacrylamide, and polyvinyl alcohol, of which polyvinyl alcohol is specifically preferable, from the aspect of less curling of the recording medium due to ralativery low hygroscopic property of the binder, and also superiority in cracking resistance and adhesiveness due to high binder function for the inorganic microparticles at a small added amount.

Polyvinyl alcohols employed in the present invention include common polyvinyl alcohol prepared by hydrolyzing polyvinyl acetate, and in addition, modified polyvinyl alcohol such as terminal cation-modified polyvinyl alcohol and anion-modified polyvinyl alcohol featuring an anionic group.

The average polymerization degree of polyvinyl alcohol prepared by hydrolyzing vinyl acetate is preferably at least 300, but is more preferably 1,000 - 5,000. Further, the saponification ratio is preferably 70 - 100%, but is more preferably 80 - 99.8%.

Cation-modified polyvinyl alcohols may, for example, be polyvinyl alcohols having a primary to tertiary amino group, or a quaternary ammonium group on the main chain or side chain of the foregoing polyvinyl alcohols as described in JP-A 61-10483, and result upon saponification of copolymers comprised of ethylenic unsaturated monomers featuring a cationic group and vinyl acetate.

Listed as ethylenic unsaturated monomers featuring a cationic group are, for example, trimethyl-(2-acrylamido-2,2-dimethylethyl) ammonium chloride, trimethyl-(3-acrylamido-3,3-dimethylpropyl) ammonium chloride, N-vinylimidazole, N-methylvinylimidazole, N-(3-dimethylaminopropyl) methacrylamide, hydroxylethyltrimethylammonium chloride, and trimethyl-(3-methacrylamidopropyl) ammonium chloride.

The content ratio of monomers containing a cation-modified group of the cation-modified polyvinyl alcohol is commonly 0.1 - 10 mol% to the vinyl acetate, but is preferably 0.2 - 5 mol%.

Listed as anion-modified polyvinyl alcohols may, for example, be polyvinyl alcohols having an anionic group as described in JP-A 1-206088, copolymers of vinyl alcohols and vinyl compounds having a water solubilizing group as described in JP-A Nos. 61-237681 and 63-307979, and modified polyvinyl alcohols containing a water solubilizing group, as described in JP-A 7-285265.

Further, listed as nonion-modified polyvinyl alcohols may, for example, be polyvinyl alcohol derivatives in which a polyalkylene oxide group is added to a part of polyvinyl alcohol as described in JP-A 7-9758, and block copolymers of vinyl compounds having a hydrophobic group and polyvinyl alcohols as described in JP-A 8-25795.

Further, polyvinyl alcohols, in which the polymerization degree or modification differ, may be employed in a combination of at least two types. Specifically, when polyvinyl alcohol featuring a polymerization degree of more than 2,000 is employed, firstly, polyvinyl alcohol featuring a lower polymerization degree is added in an amount of 0.05 - 10 weight% based on the inorganic microparticles, but preferably 0.1 - 5 weight%, after which polyvinyl alcohol featuring a polymerization degree of more than 2,000 is preferably added, resulting in no marked increase of viscosity.

The weight ratio F/B, in which the weight of the hydrophilic binder B to that of the inorganic microparticles F in the porous type ink absorptive layer, is preferably 2 - 20. In cases when the weight ratio is a factor of more than two times, a porous layer exhibiting a sufficient void ratio is obtained, resulting in a sufficient void volume, and further resulting in maintenance of a high ink absorptive rate due to no plugging of the voids with swelling of the hydrophilic binder. On the other hand, when the ratio is less than 20, cracking tends to not occur, even though the porous type ink absorptive layer is coated thicker. The specifically preferable weight ratio, F/B, being the inorganic microparticles to the hydrophilic binder, is 2.5 - 12 times, but most preferably 3 - 10.

In the above-cited porous type ink absorptive layer, various additives may be employed other than the inorganic microparticles and the binder, and of these a cationic polymer, a cross-linking agent, and a polyvalent metal compound play an important role, specifically in respect of ink absorbability and reduction of bleeding of a dye-based ink.

In cases when the coloring agent contained in the color ink of the ink composition is a water-soluble dye, a cationic polymer is preferably employed in order to prevent bleeding of the image during storage after recording.

Examples of cationic polymers include polyethyleneimine, polyallylamine, polyvinyl amine, a dicyandiamide polyalkylene polyamine condensate, a polyalkylene polyamine dicyandiamide ammonium salt condensate, a dicyandiamide formalin condensate, an epichlorohydrin-dialkylamine addition polymerization compound, a diallyl dimethyl ammonium chloride polymer, a diallyl dimethyl ammonium chloride·SO2 copolymer, polyvinyl imidazole, a vinylpyrrolidone·vinylimidazole copolymer, polyvinyl pyridine, polyamidine, chitosan, cationized starch, a vinylbenzyl trimethyl ammonium chloride polymer, a trimethyl (2-methacryloyl oxyethyl) ammonium chloride polymer, and a dimethylamino ethyl methacrylate polymer.

Further listed as examples are cationic polymers described in Kagaku Kogyo Jiho (Chemical Industry Times), Aug. 15, 25, 1998, and polymer dye fixing agents described in "Kobunshi Yakuzai Nyumon" (Introduction to High-Molecular Agents), published by Sanyo Chemical Industries, Ltd.

Further, in the porous type ink absorptive layer of this invention, it is preferable to incorporate the following compound represented by Formula (1), exhibiting a molecular weight of at most 200.

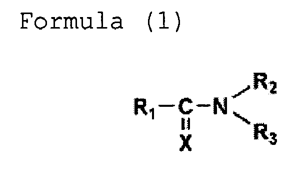

In above Formula (1), R₁ is a hydrogen atom, an alkyl group, an alkenyl group, an aryl group, an acyl group, a heteroaryl group, a heterocyclic group, NR₄R₅, or OR₆, all of which may be substituted or unsubstituted. R₂ - R₆ are identical to R₁ respectively. Further, R₁ and R₂, and R₁ and R₃ may combine with each other to form a ring. X is an oxygen atom or NH.

In above Formula (1), R1 is a hydrogen atom; a substituted or unsubstituted alkyl group (such as a methyl group, an ethyl group, an isopropyl group, a t-butyl group, a hexyl group, a dodecyl group or a cycloalkyl group); a substituted or unsubstituted alkenyl group (such as a propenyl group, butenyl group, or a nonenyl group); a substituted or unsubstituted aryl group (such as a phenyl group); a substituted or unsubstituted acyl group (such as an acetyl group, a propionyl group, a butanoyl group, a hexanoyl group, a cyclohexanoyl group, a benzoyl, or a pyridinoyl group); a substituted or unsubstitued heteroaryl group (such as a triazole group, an imidazole group, a pyridine group, a furan group, or a thiophene group); a substituted or unsubstituted heterocyclic group (such as a pyridyl group, a thiazolyl group, an oxazolyl group, an imidazolyl group, a furyl group, a pyrrolyl group, a pyrazinyl group, a pyrimidinyl group, a pyridazinyl group, a serenazolyl group, a sulfolanyl group, a piperidinyl group, a pyrazolyl group, or a tetrazolyl group); and NR₄R₅ or OR₆. Further, R₁ and R₂, and R₁ and R₃, may combine with each other to form a ring. X is an oxygen atom or NH.

In this invention, a compound represented by above Formula (1) preferably does not contain an alcoholic hydroxyl group, from the aspect of demonstrating the desired effects of this invention.

In above Formula (1), the molecular weight is preferably at most 200, and also the number of atoms except hydrogen atoms is preferably at most 15. Yet further, the compound is preferably to be water-soluble, from the viewpoint of ease of addition.

Examples of the compound represented by Formula (1) of this invention are exemplified below, but the present invention is not limited only to these examples.

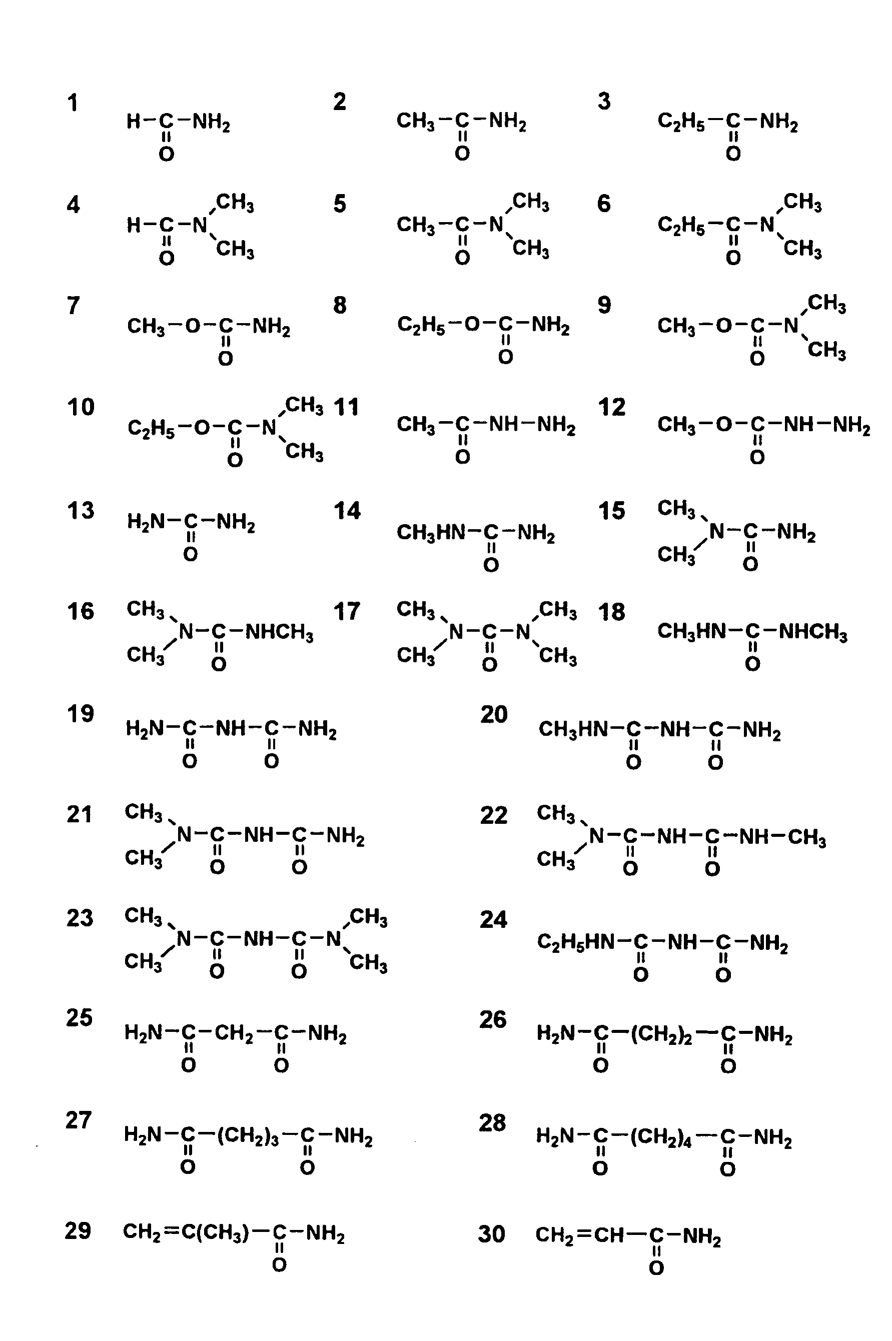

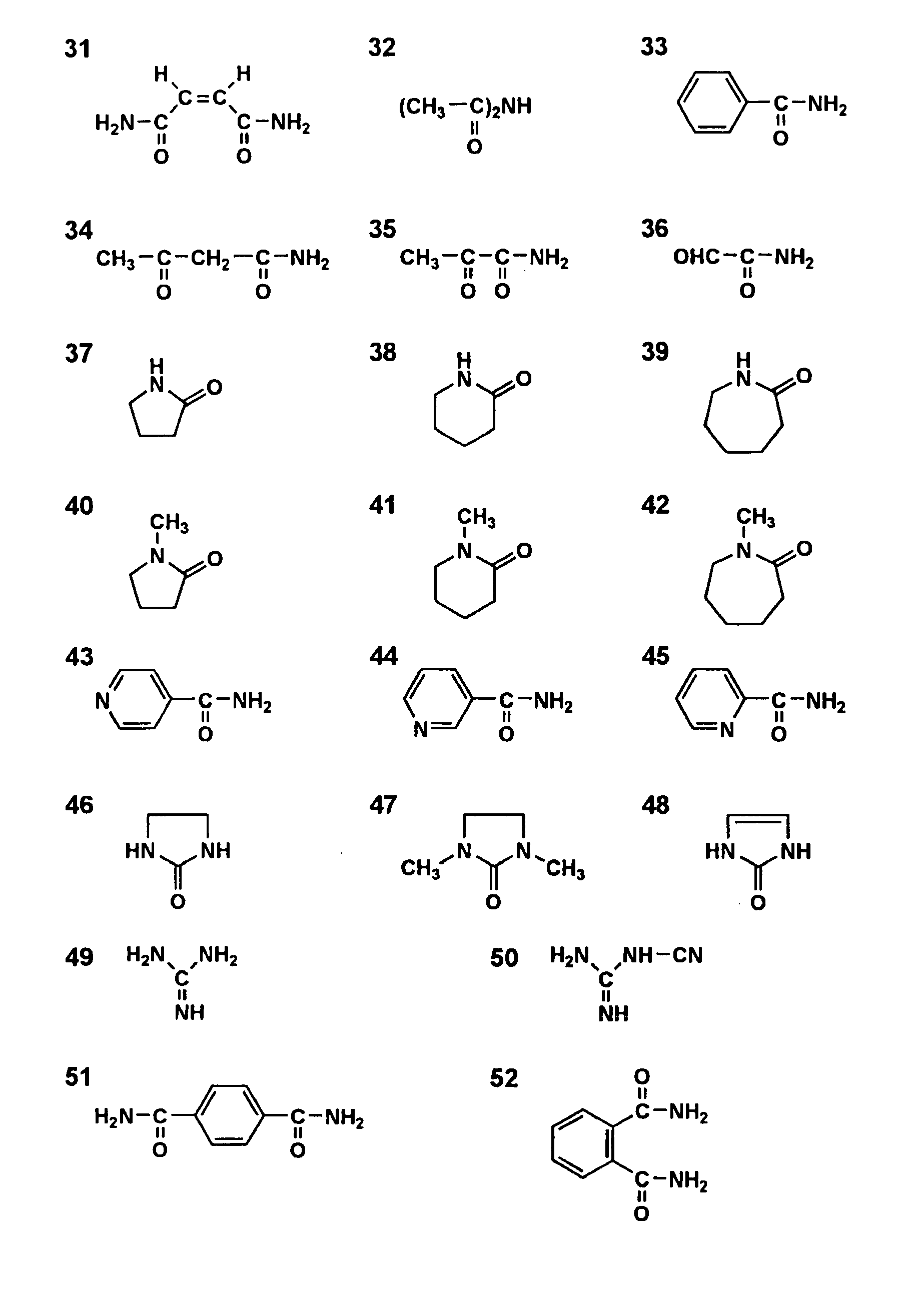

The compound represented by Formula (1) of this invention is easily synthesized according to the methods which a person skilled in the art knows well, and may also be available as a product on the market.

In the ink-jet recording medium of this invention, the compound represented by above Formula (1) is preferably urea or its derivatives, and of these, simple urea is specifically preferable.

In order to improve the water resistance and moisture resistance of a printed image, it is preferable to incorporate a polyvalent metal ion in the ink absorptive layer prepared in the ink-jet recording medium of this invention.

The polyvalent metal ion is not specifically limited as long as it is a metal ion of more than divalency, and as preferable polyvalent metal ions, listed are ions of aluminum, zirconium, and titanium.

These ions may be incorporated in the ink absorptive layer in the state of a water-soluble or water-insoluble salt. The specific examples of salts containing an aluminum ion include aluminium fluoride; a hexafluoroaluminate (such as a potassium salt); aluminum chloride; a basic aluminum chloride (such as polyaluminum chloride); a tetrachloro aluminate (such as a potassium salt); aluminum bromide; a tetrabromo aluminate (such as a potassium salt); aluminum iodide; an aluminate (such as a sodium salt, a potassium salt, or a calcium salt); aluminum chlorate; aluminum perchlorate; aluminum thiocyanate; aluminium sulfate; basic aluminium sulfate; aluminum potassium sulfate (being alum); aluminum ammonium sulfate (being ammonium alum); aluminum sodium sulfate; aluminum phosphate; aluminium nitrate; aluminum hydrogenphosphate; aluminum carbonate; polyaluminum silicate sulfate; aluminum formate; aluminium acetate; aluminum lactate; aluminum oxalate; aluminum isopropylate; aluminum butyrate; ethylacetate aluminum diisopropylate, aluminum tris- (acetyl acetonate); aluminum tris-(ethylacetoacetate); and aluminum monoacetylacetonate bis-(ethylacetoacetonate).

Of these, preferable are aluminum chloride, basic aluminum chloride, aluminum sulfate, basic aluminum sulfate, and basic aluminum silicate sulfate, of which most preferable are basic aluminum chloride and basic aluminum sulfate.

Further, as specific examples of the salts containing a zirconium ion, listed are zirconium difluoride; zirconium trifluoride; zirconium tetrafluoride; a hexafluorozirconic acid salt (such as a potassium salt); a heptafluorozirconic acid salt (such as a sodium salt, a potassium salt, and an ammonium salt); an octafluoroziconic acid salt (such as a lithium salt); fluorozirconium oxide; zirconium dichloride; zirconium trichloride; zirconium tetrachloride; hexachloro zirconic acid salt (such as a sodium salt or a potassium salt); zirconium oxychloride (being zirconyl chloride); zirconium dibromide; zirconium tribromide; zirconium tetrabromide; bromozirconium oxide; zirconium triiodide; zirconium tetraiodide; zirconium peroxide; zirconium hydroxide; zirconium sulfide; zirconium sulfate; zirconium p-toluenesulfonate; zirconyl sulfate; sodium zirconyl sulfate; acid zirconyl sulfate trihydrate; potassium zirconium salfate; zirconium selenate; zirconium nitrate; zirconyl nitrate; zirconium phosphate; zirconyl carbonate; ammonium zirconyl carbonate; zirconium acetate; zirconyl acetate; ammonium zirconyl acetate; zirconyl lactate; zirconyl citrate; zirconyl stearate; zirconyl phosphate; zirconium oxalate; zirconium isopropylate; zirconium butyrate; zirconium acetylacetonate; acetylacetone zirconium butyrate; stearic acid zirconium butyrate; bis(acetylacetonato)dichloro zirconium; and tris(acetylacetonato)chloro zirconium.

Of these compounds, from the aspect of exhibition of desired effects to prevent bleeding after printing, preferable are zirconyl carbonate, ammonium zirconyl carbonate, zirconyl acetate, zilconyl nitrate, zirconyl chloride, zirconyl lactate, and zirconyl citrate, but specifically preferable are ammonium zirconyl carbonate, zirconyl chloride, or zirconyl acetate.

These polyvalent metal ions may be employed alone or in combination of more than two kinds. The compound containing the polyvalent metal ions may be incorporated in the coating composition forming the ink absorptive layer, or may be provided in the ink absorptive layer with an over-coating method, after coating of the porous layer, but specifically after drying of the porous type ink absorptive layer. In cases when the compound containing the polyvalent metal ions is added to the coating composition forming the ink absorptive layer as the first case, employed may be a method in which the compound is added after it is dissolved in water, as an organic solvent, or a mixed solvent of these, or the compound is added after it is dispersed into microscopic particles with a wet milling method employing a sand mill or an emulsifying method. When the ink absorptive layer is composed of plural layers, the compound may be added to only one layer, or to more than two layers, or further to the coating compositions of all composing layers. Further, in the cases when the compound is provided with an over-coating method after the porous type ink absorptive layer is once formed as the latter case, it is preferable that the compound containing the polyvalent metal ions is provided into the ink absorptive layer after it is uniformly dissolved into a solvent.

In general these polyvalent metal ions are preferably employed in the range of about 0.05 - 20 mmol per m² of the recording medium, but more preferably 0.1 - 10 mmol.

The ink jet recording medium of this invention, it is preferable to add a hardening agent of the water-soluble binder which forms a porous type ink absorptive layer.

The hardening agent employed in this invention is not specifically limited as long as it initiates a hardening reaction with the water-soluble binder, of which boric acid and its salts are preferable, but other well-known agents may also be employed. The hardening agent is generally a compound which incorporates a group capable of reacting with the water-soluble binder, or which accelerate a reaction between the different groups of the water-soluble binder, and further, it is generally employed by appropriate choice based on the kind of the water-soluble binders. Specific examples of a hardening agent are, for example, epoxy system hardening agents (such as diglycidyl ethyl ether, ethylene glycol diglycidyl ether, 1,4-butanediol diglycidyl ether, 1,6-diglycidyl cyclohexane, N,N-diglycidyl-4-glycidyl oxyaniline, sorbitol polyglycidyl ether, and glycerol polyglycidy ether); aldehyde system hardening agents (such as formaldehyde, and glyoxal); active halogen system hardening agents (such as 2,4-dichloro -4-hydroxy-1,3,5-s-triazine); active vinyl system compounds (such as 1,3,5-tris acryloyl hexahydro-s-triazine, and bis-vinyl sulfonylmethyl ether); and alminum alum.

Boric acid and salts thereof refer to oxygen acid featuring a boron atom as the central atom and/or salts thereof, and specifically include orthoboric acid, diboric acid, metaboric acid, tetraboric acid, pentaboric acid, and octaboric acid, and salts thereof.

Hardening agents of boric acid and salts thereof featuring a boron atom may be employed in the form of a solution thereof, by itself or in a mixture of two or more kinds, of which specifically preferred is a mixed solution of boric acid and borax.

Generally only a boric acid solution and a borax solution are each added, in relatively diluted solutions, but a denser solution may be obtained by mixing both solutions, resulting in a concentrated coating composition of the ink absorptive layer. Further, it is beneficial to adjust the pH of the added solution to a specific level.

The total added amount of the foregoing hardening agents is preferably 1 - 600 mg per g of the foregoing water-soluble binder.

In the porous type ink absorptive layer of this invention, various additives, other than the above additives, may be added. For example, cited are: polystyrene, polyacrylic acid esters, polymethacrylic acid esters, polyacrylamides, polyethylene, polypropylene, polyvinyl chloride, polyvinylidene chloride, or copolymers thereof; microscopic organic resin particles of a urea resin or a melamine resin; various cationic or nonionic surface active agents; ultraviolet ray absorbing agents, described in JP-A 57-74193, JP-A Nos. 57-74193, 57-87988 and 62-261476; anti-fading agents, described in JP-A Nos. 57-74192, 57-87989, 60-72785, 61-146591, 1-95091, and 3-13376; fluorescent brightening agents, described in JP-A Nos. 59-42993, 59-52689, 62-280069, 61-242871, and 4-219266; pH adjusters, such as sulfuric acid, phosphoric acid, citric acid, sodium hydroxide, potassium hydroxide, and potassium carbonate; an anti-foaming agent, an antiseptic agent, a thickening agent, an antistatic agent, and a matting agent.

In the present invention, as mentioned before, it is characteristic that the difference of the pH of the ink composition and the layer surface pH of the ink jet recording medium is not more than 4.0.

The layer surface pH of the ink absorptive layer coating side of the ink jet recording medium is preferably 2.5 - 7.0, but specifically preferably 4.0 - 6.5. In this invention, by making the difference of the pH of the ink composition less than 4.0, pH deviation during ink deposition is minimized, resulting in suppression of coarse aggregation among the microscopic resin particles or between the resin particles and the coloring agent in the ink, and also image formation being superior in glossiness and coloring property.

In the present invention, the layer surface pH is a value which is determined as follows: 20 - 50 µl of pure water is dripped onto the surface of the ink absorptive layer coating side of the ink-jet recording medium with a microsyringe, and the pH is measured employing a commercial surface pH electrode at room temperature.

In this invention, to make the pH difference between the ink composition pH and the surface pH of the ink-jet recording medium to less than 4.0, a method of controlling the surface pH of the ink-jet recording medium to the required value is:
1) a method to obtain the desired layer surface pH after coating and drying by setting the pH of the coating composition the ink absorptive layer to a predetermined value;
2) a method to obtain the desired layer surface pH by over-coating and drying of an appropriate pH adjusting solution after coating, and the drying of the coating composition of the ink absorptive layer; or
3) a method to obtain the desired layer surface pH by soaking the coated and substantially dried ink absorptive layer in an aqueous solution exhibiting the appropriate pH, after coating and drying of the coating composition of the ink absorptive layer.

Among the methods of the above 1) - 3), it is preferable to choose either method described in above 2) or 3), since there is no concerns of inducing deactivation of a cationic polymer by setting and storing of the ink absorptive layer coating composition, of which method 2) is preferable due to ease of production.

Adjustment of the layer surface pH by over-coating of the appropriate pH solution is conducted by combining various acids and alkalis. As an acid, employed, for example, may be inorganic acids, such as hydrochloric acid, nitric acid, sulfuric acid, and phosphoric acid; as well as organic acids, such as acetic acid, citric acid, and succinic acid; while as an alkali, employed, for example, may be sodium hydroxide, potassium hydroxide, calcium hydroxide, ammonia water, potassium carbonate, sodium carbonate, trisodium phosphate, and triethanolamine.

In order to obtain the targeted effects of this invention, pH adjustment is required, because when an anionic dye is employed as a coloring agent, caused are problems of not only a decrease of coloring property but also reduction of image storage stability, such as ozone gas resistance and ink bleeding under conditions of high humidity, because the mordant employed to mordant this dye causes reduced mordant power due to the raised pH.

Consequently, in the ink-jet recording medium of this invention, it is preferable to provide a non-mordanting layer, which contains substantially no mordant, to the location farthest from the non-water absorptive support, from the aspect of obtaining the high layer surface pH and suppression of reduced mordant power.

Although thickness of the non-mordanting layer is desirably thin, there is concern that coating defects may be generated when it is excessively thin, concerning exhibition of the desired effects of this invention and stability of the production process. Thus it is preferably about 1.0 - 5.0 µm, and more preferably 1.0 - 3.0 µm.

Further, it is preferable that colloidal silica, exhibiting an average particle diameter of 10 - 100 nm, is incorporated in the above non-mordanting layer, which contains no mordant. The average particle diameter of colloidal silica is more preferably 10 - 50 nm from the viewpoint of exhibition of ink absorbability and high glossiness. When applying colloidal silica to a non-mordanting layer, it is specifically preferable to employ a production method described in JP-A 2004-106378, and in this case, thickness of the non-mordanting layer is preferably in the range of 0.1 - 1.0 µm from the viewpoint of ink absorbability and production stability.

In cases when the non-mordanting layer (being the outermost layer), which contains no mordant, is provided as above, a method of the foregoing pH adjusting methods of 1) - 3) is preferably chosen, but from productivity, the most preferable method is the one described in 3).

Colloidal silica of this invention is one in which silicon dioxide is dispersed in water in a colloidal state, with an average particle diameter of about 10 - 100 nm, and the shape is spherical. Examples of colloidal silica include, for example, the Snowtex series of Nissan Chemical Industries, Ltd., the Cataloid S series of Catalysts & Chemicals Industries Co., Ltd., and the Levasil series of Beyer Corp. Further, preferably employed may be cationic modified colloidal silica with alumina sol or aluminum hydroxide, and moniliform colloidal silica in which primary particles of silica are connected with more than divalent metal ions between the particles, to resemble a pearl necklace. The moniliform colloidal silica includes the Snowtex PS series and the Snowtex UP series, of Nissan Chemical Industries, Ltd.

The ink-jet recording medium of this invention may be produced by coating and drying each composing layer, including the ink absorptive layer, separately or simultaneously onto the non-water absorptive support with an appropriate method selected from well-known coating methods. Examples of the preferably employable coating methods include: a roller coating method, a rod-bar coating method, an air-knife coating method, a spray coating method, an extrusion coating method, and a curtain coating method, as well as a slide-bead coating method employing a hopper described in US Patent Nos. 2,761,419 and 2,761,791.

Viscosity of each coating composition during a simultaneous multilayer coating is preferably in the range of 5 - 100 mPa·s when employing a slide-bead coating method, but more preferably 10 - 70 mPa·s. Further, when employing a curtain coating method, it is preferably in the range of 5 - 1200 mPa·s, but more preferably 25 - 500 mPa·s.

Further, viscosity of the coating compositions at 15 °C is preferably not less than 100 mPa·s, more preferably 100 - 30,000 mPa·s, still more preferably 3,000 - 30,000 mPa·s, and most preferably 10,000 - 30,000 mPa·s.

As a coating and drying method, it is preferable that the coating compositions are heated to more than 30 °C, and are subjected to simultaneous multilayer coating, after which the formed film layer is once cooled to 1 - 15 °C, and further dried at more than 10 °C. It is more preferable to conduct drying in the range of a wet-bulb temperature of 5 - 50 °C degrees C, and a layer surface temperature of 10 - 50 °C. Further, as a cooling method immediately after coating, it is preferable to conduct a horizontal gelling method from the viewpoint of coated film uniformity.

Further, employable in this invention may be the method described in JP-A 2004-90588, as the ink absorptive layer is coated and dried, and before the coated roll is wound into a roll form, a water-soluble additive is over-coated in the on-line process, and dried again.

Further, in a manufacturing process of the recording media, it is preferable to incorporate an ageing process under the conditions of 35 - 70 °C for 1 - 60 days.

Heating conditions are not specifically limited as long as they are at 35 - 70 °C for 1 - 60 days, but a preferable example is, for example, at 36 °C for 3 - 28 days, at 40 °C for 2 - 14 days, or at 55 °C for 1 - 7 days. By conducting this aging process, acceleration of the hardening reaction or crystallization of the water-soluble binder tends to be promoted, resulting in preferable ink absorbability.

The ink-jet recording medium of this invention is required to exhibit an ink absorptive capacity to virtually simultaneously absorb the total ink volumes of the color inks forming an image and the clear ink forming a protective film layer, since the non-water absorptive support is employed as support. When the ink absorptive capability is insufficient, overflow of ink may occur during deposition of the clear ink forming the protective film layer, resulting in factors of glare caused by punctate thickness deviation.

Therefore, the ink absorptive capacity of the ink absorptive layer is preferably more than about 20 ml/m², depending on the total volume of ink to be provided. The upper limit is not specifically listed, but an increase of the ink absorptive volume requires it only to provide a thicker ink absorptive layer, and thus, prevent not only drastic increase of problems such as curling, but also to prevent an increase of cracking during production, resulting in rising cost due to increased producing restriction. Considering these matters, the preferable upper limit of the ink absorptive volume is generally about 30 ml/m².

When conducting image recording, it is necessary to control the total volume of the color inks to form the image, as well as the total volume of clear ink to form the protective layer to keep the total volume below the ink absorptive capacity of the recording medium.

Next, the surface properties of the recording medium of this invention will be described.

In the ink-jet recording medium of this invention, a center-line average roughness (Ra) of the porous type ink absorptive layer surface is preferably 0.08 - 0.20 µm, which is measured in accordance with a reference length of 2.5 mm and an cutoff value of 0.8 mm, as defined in JIS B-0601.

In cases when the Ra of the porous type ink absorptive layer is less than 0.08 mm, tone change in the background tends to be caused by difference of viewing angle due to a fringe pattern, when the protective film layer having a dry solid content of 0.05 - 0.3 g/m² is formed in a white area. It is thought that, since smoothness of the ink absorptive layer surface is too high, and thus smoothness of the boundary face between the protective film layer and the ink absorptive layer surface also becomes too high, and regular light reflection increases, resulting in a tendency of occurrence of fringe patterns. Therefore, it is also thought that punctate glare due to the fringe patterns may be suppressed by controlling regular reflection of light with a slightly roughened surface.

On the other hand, if Ra exceeds 0.20 µm, glare tends to be marked as points of light in high density areas, specifically in a black solid areas. Although when the texture is an embossed one, the point-like glare is not very worrisome, but in this case, point-like glare in high density areas largely affects print quality to become undesirable, largely due to the fact that the recording medium exhibits higher glossiness, and a uniform recording surface in the background and low density areas.

The preferable Ra is 0.10 - 0.18 µm.

A method to regulate Ra of the ink absorptive layer surface within the above range may be appropriately selected from a range of methods. Specific methods are:
A) to regulate surface smoothness of the core paper of the support with, for example, regulation of fiber length of pulp, regulation of pressure at a calender treatment, or regulation of the amount of a surface sizing agent,
B) to regulate the thickness of a polyolefin resin which covers a core paper of the support,
C) to chage an effective surface profile of cooling rollers employed at melt extrusion of the polyolefin resin onto the paper support by, for example, a specular roller, a slightly roughened-surface roller, or a matt-surfaced roller,
D) to change composition or thickness of an undercoating layer,
E) to regulate a particle diameter of the microscopic inorganic particles incorporated in the porous type ink absorptive layer,
F) to add various surface reforming agents to a non-mordanting layer (being the outermost layer),
G) to regulate the drying conditions after coating of the porous type ink absorptive layer,
H) to resupply water or other solvents, after coating and drying of the porous type ink absorptive layer.

Although Ra of the background areas after applying the protective film layer by clear ink depends also on the ejection conditions of the clear ink, it generally decreases to that before the protective film layer was provided, and is generally about 0.05 - 0.15 µm.

Further, 60-degree specular glossiness of the porous type ink absorptive layer in accordance with JIS Z-8741 is generally 30 - 70%. This glossiness itself does not necessarily correspond completely to Ra, but the glossiness generally tends to be lowered as Ra is raised.

Glossiness of the background after providing the protective film layer by the clear ink may be changed by providing a protective film layer as well as Ra, and glossiness generally rises 5 - 40% compared to that before providing a protective film layer.

Further, a ten-point average roughness (Rz) of the porous type ink absorptive layer surface, measured at a reference length of 2.5 mm and a cutoff value of 0.8 mm as defined in JIS B-0601, is preferably 0.5 - 5.0 µm, while the maximum waviness of that, measured at a reference length of 2.5 mm about the filtered waviness profile introduced under the condition of a cutoff value of 0.8 mm from the profile curve which is measured based on JIS B-0601, is preferably 0.5 - 5 µm, and also the 60-degree C value defined in JIS K7105 is preferably in the range of 30 - 90%.

An employable ink-jet recording device with the ink-jet image forming method of this invention and a method of providing the clear ink of this invention will now be described.

The method of providing the clear ink may be any one able to provide the clear ink to at least selected portions in the image, but preferable is one which employs an ink-jet head as well as the color ink. The ink-jet image forming method of this invention is characterized by employment of an ink-jet head equipped with more than two nozzles which eject the ink compositions onto the ink-jet recording medium.

At this time, the ink-jet head for the clear ink may be only one, or plural ink-jet heads may be installed to provide clear inks of different compositions. In the ink-jet image forming method of this invention, the ink-jet heads for clear ink ejection and color ink ejection are preferably fixed to the same carriage, and the clear ink is preferably ejected immediately following the color ink ejection, so as to provide the targeted effects of this invention, such as initial film forming property and ink absorbability, and also improved image clarity. Over time after the image is formed of the color ink, the ink solvent contained in the color ink is dried, resulting in concerns that a definite boundary may be formed between the ink film surface formed by the color ink and the clear ink film. As described above, preferable is that ejection of both inks is performed in the same printer, and specifically, in cases when the color ink contains microscopic resin particles, it is important to eject the clear ink before film fusion of microscopic resin particles each, from the aspect of ink absorbability.

Formation of a protective film layer is performed by clear ink so that the layer may be 0.1 - 0.6 g/m² of the recording medium as dried solid content. In cases when the dried solid content exceeds 0.3 g, rainbow-like tone change tends to occur in the background areas. On the other hand, when it is less than 0.1 g, film formation is insufficient, and point-like defects easily occur. As a result, improved effects of anti-fading of the dye ink are rapidly lowered, or reduced effects of glossiness deviation and improved image clarity in the image areas of the pigment ink are noticed. The dried solid content of the film formed by the clear ink is preferably 0.1 - 0.6 g/m², and thickness of the film is preferably more than 350 nm, together with the color ink.

In addition, the image clarity mentioned above is defined in JIS K-7105, and is a method to determine image clarity as image definition from the waveform of light intensity obtained through an optical comb employing an optical apparatus. Image clarity expresses the capacity of the film surface to reflect an image of an object facing the film surface, and is a value to show how accurately an incident image is reflected or projected on an image surface. The more accurate a reflective image is against an incident image, the higher image clarity is, resulting in a large C value. This C value represents the combined effects of specular glossiness and surface smoothness, and the larger the C value becomes the higher is reflectivity or the higher is smoothness. Image clarity may be determined by employing, for example, Image Clarity Meter ICM-IDP (manufactured by Suga Test Instruments Co., Ltd.) under the conditions of 60-degree reflection and a 2 mm optical comb in image clarity (being a glossiness value of C value%). In this invention, image clarity of C value is preferably more than 70 in the image regions of all densities.

The areas carrying the clear ink may be any portion of the ink-jet recording medium. To obtain the desired effects of this invention, the clear ink is preferably provided to regions where the color ink is provided and also is not provided.

Further, the provided amount of the clear ink differs in the appropriate quantity, depending on each concentration of composition of the color ink and the clear ink, and also in the characteristics of the ink-jet recording medium, but it is preferable to provide more than 2 ml/m² However, when the clear ink is provided at more than 20 ml/m², image quality is deteriorated and glossiness is decreased, which is of course not acceptable. Further, the provided amount of clear ink is preferably enough to control the total amount of the clear and color inks to be within a certain definite range. The minimum of total amount is preferably at least 2 ml/m², but is more preferably more than 8 ml/m².

Further, in cases when the color ink contains microscopic resin particles, it is preferable to control the total amount of the microscopic resin particles provided by both inks in each printing region, considering the amount of microscopic resin particles contained in the color ink and also in the colorless ink. At this time, the total amount of the microscopic resin particles is preferably more than 0.5 g/m² in each region, but is more preferably more than 1.0 g/m².

A method for image recording on the recording medium of this invention employing the color ink and the clear ink will now be described.

After conducting image recording by color ink on the ink-jet recording medium of this invention, the preferable method is to form a protective film layer on basically all regions of the recording medium by ejection of the clear ink onto basically the entire surface of the regions of the recording medium.

Herein, "to form a protective film layer on basically all regions of the recording medium" refers to a recognizable state in which a protective film layer is formed on the entire surface of the recording medium by ordinary observation. For example, even if the protective film layer is not formed near edges of the recording medium, adverse effect on print quality there is minimal, and it is seen as a protective film layer being on the entire surface by an observer. Usually, it is recognized that a protective film layer is on the entire surface of the recording medium, even if regions of about 1 mm from edges of the medium are not covered with the protective film layer, and preferable is that region within less than 0.5 mm are not coated. As another option, the regions which are not covered by the ejected clear ink, may be cut off, or may be covered by a frame. Therefore, it is wasteful to eject the clear ink onto the regions which are not critical. The point is that, in usual image printing, the image recording method on the recording medium of this invention is to cover the entire surface with the clear ink, in which regions are the image as background and areas ejected with color ink.

According to studies of the inventors, in order to form a thin uniform protective film layer, components of the clear ink to be provided and a providing method of it, of course, are important, but uniformity of the recording medium surface to be covered by clear ink is extremely important, because the provided amount of the clear ink is so minimal. That is, in cases when minute punctate (or point-like) defects or minute cracks exist on the recording medium surface, unevenness occurring in the protective film layer formed at those portions (unevenness such as thick, thin or not formed at all), and then the portion tends to be recognized as point-like defects, resulting in deterioration of overall print quality. To overcome the above problems, it is preferable that the foregoing compound specifically represented by Formula (1) is incorporated in the ink-jet recording medium of this invention, as a result of prevention of surface defects and cracking of the recording medium. Further, as the effects of addition of the compound of foregoing Formula (1), enhancement of ink absorbability is known, and since the amount of ink solvents remaining on the recording medium surface is quickly absorbed, a homogeneous protective film layer can be obtained without repellent spotting and unevenness, during provision of the clear ink after the color ink.

### EXAMPLES

The present invention will now be specifically described with reference to examples, however the present invention is not limited thereto. In these Examples, the expression "parts" or "%" is employed, which represents weight parts or weight%, unless otherwise noted.

### Example 1

### Preparation of Ink Set (Ink Composition)

### Preparation of Ink Set 1

### Preparation of Color Ink Set 1

Color Ink Set 1 was prepared as follows. Color Ink Set 1 was composed of six colors of Dark Inks of Yellow Ink (Y), Magenta Ink (M), Cyan Ink (C), and Black Ink (K), and Light Inks of Light Magenta Ink (Lm), and Light Cyan Ink (Lc). After each ink was mixed as follows, pH was adjusted within the range of 9.0 ± 0.3 by dripping of triethanolamine. Subsequently, the ink was filtered employing a 3 µm membrane filter, and transferred into an empty cartridge.

### Preparation of Dark Color Ink: Yellow Ink (Y)

| | |
|---|---|
| Dye: Direct Yellow 86 | 3.0 weight% |
| Diethylene glycol | 13 weight% |
| Glycerine | 10 weight% |
| Triethylene glycol monobutyl ether | 5.0 weight% |
| Microscopic resin particles [SX105A: produced by Zeon Corp., being a styrene-butadiene copolymer resin (namely as anion modified latex), exhibiting Tg of 0 °C, an average particle diameter of 109 nm] (in solid content equivalent) | 1.5 weight% |
| Surface active agent (Surfynol 465: produced by Air Products and Chemicals, Inc.) | 1.0 weight% |
| Pure water | enough to bring to 100 weight% |

### Preparation of Dark Color Inks: Magenta Ink (M), Cyan Ink (C), and Black Ink (K)

Magenta Ink (M), Cyan Ink (C), and Black Ink (K) were prepared in the same manner as the cited Yellow Ink (Y), except that the dye of Direct Yellow 86 was replaced by Direct Red 227, Direct Blue 199, and Hood Black 2, respectively.

### Preparation of Light Ink: Light Magenta Ink (Lm)

| | |
|---|---|
| Dye: Direct Red 227 | 0.8 weight% |
| Diethylene glycol | 10 weight% |
| Glycerine | 10 weight% |
| Triethylene glycol monobutyl ether | 10 weight% |
| Microscopic resin particulate [SX1105A: produced by Zeon Corp., being a styrene-butadiene copolymer resin (anion modified latex), exhibiting Tg of 0 °C, an average particle diameter of 109nm] at a solid content equivalent of | 1.0 weight% |
| Surface active agent (Surfynol 465: produced by Air Products and Chemicals, Inc.) | 0.8 weight% |
| Pure water | enough to bring to 100 weight% |

### Preparation of Light Ink: Light Cyan Ink (Lc)

Light Cyan Ink (Lc) was prepared in the same manner as above Light Magenta Ink (Lm), except that the dye was replaced with Direct Blue 199, instead of Direct Red 227. Preparation of Clear ink 1

| | |
|---|---|
| Diethylene glycol | 10 weight% |
| Glycerine | 10 weight% |
| Triethylene glycol monobutyl ether | 10 weight% |
| Microscopic resin particulates [SX1105A: produced by Zeon Corp., being a styrene-butadiene copolymer resin (anionic modified latex), exhibiting a Tg of 0 °C, an average particle diameter of 109nm] (in solid content equivalent) | 2.0 weight% |
| | |
| Surface active agent (Surfynol 465: produced by Air Products and Chemicals, Inc.) | 0.5 weight% |
| Pure water | enough to bring to 100 wt% |

After that, triethanolamine was dripped and the pH was regulated to remain in the range of 9.0 ± 0.3. Subsequently, the prepared ink was filtered employing a 3 µm membrane filter, and filled into an empty ink cartridge.

As described above, Ink Set 1 consisted of Color Ink Set 1 and Clear Ink 1, was thus prepared.

### Preparation of Ink Sets 2 - 5

Ink Sets 2 - 5 were prepared in the same manner as above Ink Set 1, except that the pH of each Color Ink and Clear Ink was adjusted to that of the following pH (to remain in the range of ± 0.3).

In addition, pH adjustment was appropriately conducted by dripping of a sodium hydroxide-potassium phosphate buffer solution, triethanolamine, or a sodium hydroxide aqueous solution.
Ink Set 1: pH 9.0
Ink Set 2: pH 6.3
Ink Set 3: pH 7.0
Ink Set 4: pH 10.5
Ink Set 5: pH 12.0

### Preparation of Ink-jet Recording Medium

### Preparation of Recording Medium 1

### Preparation of Non-water Absorptive Support

To 100 parts of a wood pulp (exhibiting LBKP/NBSP at 50/50), added was a slurry liquid of one part of polyacrylamide, four parts of an ash content (being talc), two parts of cationized starch, 0.5 part of polyamide epichlorohydrin resin, and a proper quantity of alkyl ketene dimers (serving as a sizing agent), and then the core paper was prepared employing a Fourdinier paper machine to obtain the coverage of 170 g/m². After a calendering treatment of this paper, one side of the core paper was covered with a melt-extrusion coating method, at 320 °C, by a low density polyethylene resin exhibiting a density of 0.92 and containing an anatase type titanium oxide of 7 weight% and a small quantity of a tone adjusting agent, to obtain a thickness of 28 µm, and further, the surface was immediately cooled with a speculate surface cooling roller.
Subsequently, the other side was covered with a melted compound of mixture of high density polyethylene (at a density of 0.96)/ low density polyethylene (at a density of 0.92) at a ratio of 70/30, to a thickness of 32 µm, also employing a melt-extrusion coating method. The 60-degree glossiness and the center-line average roughness Ra on the face side on which the ink absorptive layer was provided, were 56% and 0.12 µm.

After the titanium oxide containing layer side of the support was subjected to a corona discharge treatment, 0.05 g/m² gelatin was aoolied as a sub-coating layer.

Onto the opposite side, a styrene/acrylic system emulsion, containing silica particles (serving as a matting agent) of an average particle diameter of about 1.0 µm and a small amount of a cationic polymer (serving as a conductive agent) was coated to a dry thickness of about 0.5 µm, resulting in a non-water absorptive support to be coated onto the ink absorptive layer.

The opposite side of this non-water absorptive support exhibited a glossiness of about 18%, an SRA of about 4.5 µm, and a Beck smoothness between 160 - 200 sec.

The core paper of this non-water absorptive support obtained in this manner, exhibited a moisture content of 7.0 - 7.2%, an opacity of 96.5%, and a whiteness of L* = 95.2, a* = 0.56, and b* = -4.35.

### Preparation of Microscopic Particle Dispersion Liquid

### Preparation of Titanium Oxide Dispersion Liquid

To 90 L of an aqueous solution containing 150 g of sodium tripolyphosphate (at a pH of 7.5), 500 g of polyvinyl alcohol (specifically PVA 235, produced by Kuraray Co., Ltd.), 150 g of a cationic polymer (being P-1), and 10 g of an anti-foaming agent (specifically SN381, produced by San Nopco Ltd.), added was 20kg of titanium oxide exhibiting an average particle diameter of about 0.25 µm (specifically W-10, produced by Ishihara Sangyo Kaisha, Ltd.), after which it was dispersed employing a high pressure homogenizer (manufactured by Sanwa Industries Co., Ltd.), and then the total volume was brought to 100 L, to prepare a uniform titanium oxide dispersion liquid.

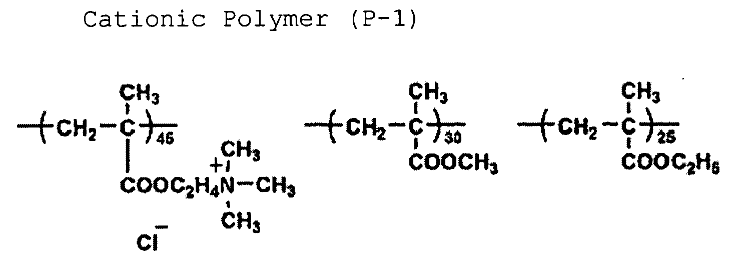

### Preparation of Silica Dispersion Liquid 1

A mixture of the following components was prepared.

| | |
|---|---|
| Water | 71 L |
| Boric acid | 0.27 kg |
| Borax | 0.24 kg |
| Ethanol | 2.2 L |
| Cationic Polymer (being P-1), a 25% aqueous solution | 17 L |
| Anti-fading agent (being AF1*1), a 10% aqueous solution | 0.5 L |
| Fluorescent brightening agent aqueous solution (W1*2) | 0.1 L |
| Pure water | enough to bring to 100 L |

To the above mixture, 50 Kg of a gas phase method silica (specifically Aerosil 300, exhibiting an average primary particle diameter of 7 nm, produced by Nippon Aerosil Co., Ltd.) was added, and the silica was dispersed with a dispersing method described in Example 5 in JP-A 2002-47454, to prepare Silica Dispersion Liquid 1.
* 1: an anti-fading agent (being AF1): HO-N(C₂H₄SO₃Na)₂
* 2: specifically UVITEX NEW LIQUID, produced by Ciba Speciality Chemicals

### Preparation of Silica Dispersion Liquid 2

Silica Dispersion Liquid 2 was prepared in the same manner as above Silica Dispersion Liquid 1, except that Cationic Polymer (P-1) was replaced with Cationic Polymer (P-2).

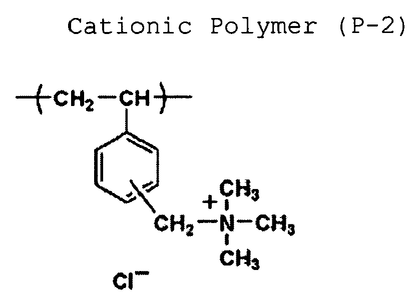

### Preparation of Coating Composition

Based on the following contents, each coating composition serving a 1st layer, a 2nd layer, a 3rd layer, and a 4th layer was prepared.

### Coating Composition for 1st Layer

The Coating Composition for the 1st Layer was prepared as the following additives sequentially added to 610ml of Silica Dispersion Liquid 1 prepared as above while stirring at 40 °C.

| | |
|---|---|
| Polyvinyl alcohol (being PVA235, produced by Kuraray Co., Ltd.) being a 5% aqueous solution | 220 ml |
| Polyvinyl alcohol (being PVA245, produced by Kuraray Co., Ltd.) being a 5% aqueous solution | 80 ml |
| Titanium Oxide Dispersion Liquid | 30 ml |
| Polybutadiene dispersion liquid (exhibiting an average particle diameter of about 0.5 µm, and a solid content of 40%) | 15 ml |
| Surface active agent (being SF1) a 5% aqueous Solution | 1.5 ml |
| Urea (being a 10% aqueous solution) | 10 ml |
| Water was added to bring the total volume to | 1,000 ml |

### Coating Composition for 2nd Layer

The Coating Composition for the 2nd Layer was prepared as the following additives were sequentially added to 630ml of Silica Dispersion Liquid 1, prepared as above while stirring at 40 °C.

| | |
|---|---|
| Polyvinyl alcohol (being PVA235, produced by Kuraray Co., Ltd.) being a 5% aqueous solution | 180 ml |
| Polyvinyl alcohol (being PVA245, produced by Kuraray Co., Ltd.) being a 5% aqueous solution | 80 ml |
| Polybutadiene dispersion liquid (exhibiting an average particle diameter of about 0.5 µm, and a solid content of 40%) | 15 ml |
| Urea (being a 10% aqueous solution) | 10 ml |
| Water was added to bring the total volume to | 1,000 ml |

### Coating Composition for 3rd Layer

The Coating Composition for the 3rd Layer was prepared as the following additives were sequentially added to 650ml of Silica Dispersion Liquid 2, prepared as above while stirring at 40 °C.

| | |
|---|---|
| Polyvinyl alcohol (being PVA235, produced by Kuraray Co., Ltd.) being a 5% aqueous solution | 180 ml |
| Polyvinyl alcohol (being PVA245, produced by Kuraray Co., Ltd.) being a 5% aqueous solution | 80 ml |
| Urea (being a 10% aqueous solution) | 10 ml |
| Water was added to bring the total volume to | 1,000 ml |

### Coating Composition for 4th Layer

The Coating Composition for the 4th Layer was prepared as the following additives were sequentially added to 650ml of Silica Dispersion Liquid 2, prepared as above while stirring at 40 °C.

| | |
|---|---|
| Polyvinyl alcohol (being PVA235, produced by Kuraray Co., Ltd.) being a 5% aqueous solution | 180 ml |
| Polyvinyl alcohol (being PVA245, produced by Kuraray Co., Ltd.) being a 5% aqueous solution | 80 ml |
| Saponin (being a 50% aqueous solution) | 4 ml |
| Surface Active Agent Being SF1) being a 5% aqueous solution | 6 ml |
| Urea (being a 10% aqueous solution) | 10 ml |
| Water was added to bring the total volume to | 1,000 ml |

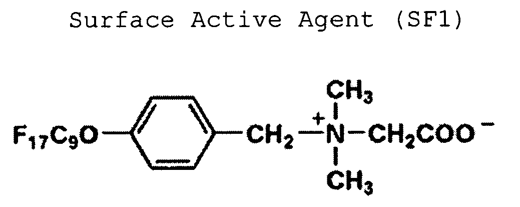

Each of the above Coating Composition was filtered with a dual-stage filtration employing filters capable of trapping 20 µm. All of above-cited Coating Compositions exhibited the viscosity characteristics of 30 - 80 mPa·s at 40 °C, and 30,000 - 100,000 mPa·s at 15 °C.

Further, the pH of the Coating Compositions for the 3rd and 4th layer was controlled to 4.6 (at 25 °C) by suitably adjusting a mole ratio of boric acid/borax.

### Coating

The above coating compositions were simultaneously coated at the 1st layer being 35 µm, the 2nd layer being 45 µm, the 3rd layer being 45 µm, and the 4th layer being 40 µm. The figures indicate the wet thickness of each layer.
Coating was conducted employing a curtain coater capable of coating four layers at 40 °C, by simultaneous coating at a coating rate of 100 m/min. and a coating width of about 1.5 m. Immediately following coating, the coated material was cooled for 20 sec. in a cooling zone maintained at 8 °C, after which it was dried by blown air of the following temperature, such as at 20 - 30 °C and less than 20% RH for 30 sec. at 60 °C and less than 20% RH for 120 sec., and at 55 °C and less than 20% RH for 60 sec. (The film layer temperature in a constant rate drying region being 8 - 30 °C, and it being gradually raised in a decreasing drying region.) After that, the coated material was subjected to humidity conditioning in a humidity conditioning zone of 23 °C and 40 - 60% relative humidity, and to wind into a roll, to obtain Recording Medium 1. The obtained Recording Medium 1 was stored, maintained at 40 °C for 5 days in the form of roll, after which the roll was cut into the predetermined sizes. The ink absorptive capacity of the Recording Medium 1 was 25 ml/m², by Bristow measurement.

Further, the film surface pH of Recording Medium 1 measured by the following method was 4.5.

### Preparation of Recording Medium 2

Recording Medium 2 was prepared in the same manner as Recording Medium 1, except that the pH of the 3rd and 4th Layer Coating Composition was adjusted to 3.8 (at 25 °C) by appropriately adjusting the mole ratio of boric acid/borax. Preparation of Recording Medium 3

Recording Medium 3 was prepared in the same manner as Recording Medium 1, except that the pH of the 3rd and 4th Layer Coating Composition was adjusted to 5.2 (at 25 °C) by appropriately adjusting the mole ratio of boric acid/borax. Preparation of Recording Medium 4

Recording Medium 4 was prepared in the same manner as Recording Medium 1, except that a 0.9% potassium phosphate aqueous solution was over-coated onto Recording Medium 1 employing a wire-bar.

### Preparation of Recording Medium 5

Recording Medium 5 was prepared in the same manner as Recording Medium 1, except that a 3.4% potassium phosphate aqueous solution was over-coated onto Recording Medium 1 employing a wire-bar.

### Preparation of Recording Medium 6

Recording Medium 6 was prepared in the same manner as Recording Medium 1, except that a 8.5% sodium hydrogen carbonate aqueous solution was over-coated onto Recording Medium 1 employing a wire-bar.

### Measurement of film layer surface pH of each Recording Medium

Onto the ink absorptive layer side surface of Recording Media 1 - 6 as prepared above, 30 µl of pure water was dripped, and the film surface pH at the time of 30 seconds passing at room temperature was measured employing a flat electrode (being GST-5313F, produced by Toa Electronics Ltd.). The obtained film surface pH value of each Recording Medium is shown below.
Recording Medium 1: Film surface pH 4.5
Recording Medium 2: Film surface pH 3.7
Recording Medium 3: Film surface pH 5.2
Recording Medium 4: Film surface pH 5.1
Recording Medium 5: Film surface pH 6.7
Recording Medium 6: Film surface pH 9.7

### Ink-jet Image Recording

Recording Materials 101 - 110 were prepared in combinations of Ink Sets consisting of the color ink and the clear ink, and Recording Medium as described in Table 1, employing the ink-jet recording apparatus described in Fig. 1.

A piezo type ink-jet recording apparatus was provided, in which as described in Fig. 1, the ink droplet volume per ejection was controlled, and in which each recording head of six color inks and a clear ink, that is, as the color inks, dark inks of Yellow Ink (Y), Magenta Ink (M), Cyan Ink (C), and Black Ink (K); and light inks of Light Magenta Ink (Lm) and Light Cyan Ink (Lc). Each color ink was used to carry out image formation at a droplet volume of 4 pl and recording resolution of 1,440 x 1,440 dpi (dpi: represents the dot number per inch, being 2.54cm).

The ejection volume of the clear ink was controlled so that the total volume of the clear and the color inks became 17 ml/m², while at the same time of image formation by the color inks with recording resolution of 1,440 x 1,440 dpi, employing a system to control the droplet volume and also the deposited volume onto the recording medium. And thus, the surface film layer was formed.

An ink-jet recording apparatus employed in the above printing, which is described in Fig. 1, will be further described.

As shown in Fig. 1, the recording apparatus features Recording Head 22 for the colored ink, and Recording Head 22 for the colorless ink, which are serially mounted in the carriage, whereby, image printing by color inks and the protective film layer formation were conducted.

Usually any of a piezo method, a thermal method, or a continuous method may be employable for Recording Head 22, however, in this Examples, the piezo method was employed due to its ejection stability of ink containing microscopic resin particles.

To each Recording Head 22, inks were supplied via tubing/piping from the cartridges for the color inks and the cartridge for the clear ink, neither of which is shown. Recording Heads 22 were placed 7 abreast in the scanning direction, and were employed for the six color inks and the clear ink.

### Evaluation of Formed Image

### Evaluation of Ozone Fading Resistance

Employing the ink-jet recording apparatus described in Fig. 1, seven inks of six dark color inks, namely Yellow Ink (Y), Magenta Ink (M), Cyan Ink (C), and Black Ink (K), and light inks of Light Magenta Ink (Lm) and Light Cyan Ink (Lc), and the clear ink, were ejected. As an ejecting condition, employing an algorithm of the total ink coverage to become 17 g/m², the color inks of the yellow ink, both magenta inks, both cyan inks, and the black ink, as well as the clear ink were ejected at the same time. The resulting gray patch image was dried over 24 hours under an environment of 23 °C and 55% RH, after which optical density A was measured employing X-rite 938 Densitometer, manufactured by X-Rite, Inc. Subsequently, employing an ozone testing machine (being an Ozone-Weather Meter OMS-H, manufactured by Suga Test Instruments Co., Ltd.), the patch was continuously exposed to an ozone concentration of 10 ppm/hour. Optical density B was measured employing the same X-rite 938, manufactured by X-Rite, Inc., and accumulated ozone exposure amount 1 of fading to 70% of initial optical density A was determined. Subsequently, after the gray patch image was dried as above over 24 hours under an environment of 23 °C and 55% RH, subsequently it was stored under an environment of 40 °C and 80% RH under continuous blown air for 4 days, and optical density A' was measured employing the same method and densitometer. Subsequently, the gray patch image was exposed to ozone with the same machine and conditions, accumulated ozone exposure amount 2 faded to 70% of initial optical density A' was determined.

Further, accumulated ozone exposure amount 1 of untreated Recorded Image 101 was set to 100, and then the relative accumulated ozone exposure amount of each Recorded Image was determined.

### Measurement of Image Clarity C Value

Color images of solid yellow, solid magenta, and solid cyan formed by simultaneous ejection of each color ink and the clear ink, and a solid blue, a solid green, a solid red, and a solid black which were formed by composition of the inks, were formed, employing a total of seven inks, namely dark inks of Yellow Ink (Y), Magenta Ink (M), Cyan Ink (C), and Black Ink (K), and light inks of Light Magenta Ink (Lm) and Light Cyan Ink (Lc), as well as a clean ink, and also employing settings so that the total provided ink was 17 ml/m². Further, a colorless solid image was formed by the clear ink alone under the ejection conditions of the total provided ink being 17 ml/m².

Subsequently, according to JIS K 7105, Image Clarity 1 (glossiness value of C value%) of each solid image was measured under the conditions of 60-degree reflection and an optical comb of 2 mm, employing Image Clarity Meter ICM-IDP (manufactured by Suga Test Instruments Co., Ltd.), and the lowest C value of each solid image was determined, and this value was brought into the measure of Image Clarity.

After each solid image was similarly stored under an environment of 40 °C and 80% RH with continuously blown air for 4 days, Image Clarity was determined similarly to above, and this value was referred to Image Clarity 2.

The results obtained above are shown in Table 1.

**Table 1**

| Recorded Image No. | Ink Set | | Recording Medium | | *1 | Untreated image | | Treated image under high temperature and high humidity | | Remarks |
|---|---|---|---|---|---|---|---|---|---|---|
| | No. | PH of Ink solution | No. | Film surface pH | | Ozone fading resistance 1 | Image Clarity C value | Ozone fading 1 resistance 2 | Image Clarity 2 C value | |
| 101 | 1 | 9.0 | 1 | 4.5 | 4.5 | 100 | 42 | 105 | 44 | Comp. |
| 102 | 1 | 9.0 | 2 | 3.7 | 5.3 | 88 | 35 | 84 | 33 | Comp. |
| 103 | 1 | 9.0 | 3 | 5.2 | 3.8 | 144 | 77 | 157 | 81 | Inv. |
| 104 | 1 | 9.0 | 4 | 5.1 | 3.9 | 138 | 70 | 143 | 74 | Inv. |
| 105 | 1 | 9.0 | 5 | 6.7 | 2.3 | 162 | 78 | 169 | 80 | Inv. |
| 106 | 1 | 9.0 | 6 | 9.7 | 0.7 | 173 | 76 | 177 | 78 | Inv. |
| 107 | 2 | 6.3 | 1 | 4.5 | 1.8 | 163 | 50 | 102 | 43 | Comp. |
| 108 | 3 | 7.0 | 1 | 4.5 | 2.5 | 154 | 71 | 158 | 74 | Inv. |
| 109 | 4 | 10.5 | 1 | 4.5 | 6.0 | 77 | 30 | 62 | 30 | Comp. |
| 110 | 5 | 12.0 | 1 | 4.5 | 7.5 | 69 | 28 | 67 | 29 | Comp. |

| | | | | | | | | | | |
|---|---|---|---|---|---|---|---|---|---|---|
| *1: pH difference between Ink solution and Recording Medium Comp.: Compatible example, Inv.: This invention | | | | | | | | | | |

As is apparent from Table 1, the recorded images of this invention formed of a combination of the ink set consisting of the compositions defined in this invention and the recording medium of this invention, exhibits superiority in ozone fading resistance and image clarity when the image is not untreated, but even after the image is stored under high temperature and humidity conditions, still excellent ozone fading resistance and image clarity are also achieved, compared to the comparative examples.

### Example 2

### Preparation of Ink Set

### Preparation of Ink Sets 6 - 14

Ink Sets 6 - 14 were prepared in the same manner as preparation of Ink Set 1 described in Example 1, except that the microscopic resin particles [being SX1105A, produced by Zeon Corp., and being a styrene-butadiene copolymer resin (anionic modified latex), exhibiting a Tg of 0 °C and an average particle diameter of 109 nm] employed in Color Ink Set 1 and Clear ink 1, was replaced with each of the microscopic resin particles described in Table 2.

In addition, the details of each type of microscopic resin particle, described in Table 2 with abbreviated names, is shown below.

SF 300: an anionic modified urethane resin, exhibiting a Tg of -42 °C and an average particle diameter of 91 nm, produced by Dai-Ichi Kogyo Seiyaku Co., Ltd.

SR 110: an anionic modified styrene-butadiene copolymer resin, exhibiting a Tg of -27 °C and an average particle diameter of 116 nm, produced by Nippon A&L Inc.

A 2510: an anionic modified styrene-butadiene copolymer resin, exhibiting a Tg of -19 °C and an average particle diameter of 135 nm, produced by Asahi Chemical Industry Co., Ltd.

SR 108: an anionic modified styrene-butadiene copolymer resin, exhibiting a Tg of -9 °C and an average particle diameter of 109 nm, produced by Nippon A&L Inc.

SR 130: a styrene-butadiene copolymer resin (being not modified), exhibiting a Tg of -6 °C and an average particle diameter of 150 nm, produced by Nippon A&L Inc.

Joncryl 711: an anionic modified acrylic resin, exhibiting a Tg of 10 °C and an average particle diameter of 137 nm, produced by Johnson Polymer Co., Ltd.

P 6030: an anionic modified styrene-butadiene copolymer resin, exhibiting a Tg of 10 °C and an average particle diameter of 137 nm, produced by Asahi Chemical Industry Co., Ltd.

KT 8701: an anionic modified polyester resin, exhibiting a Tg of 14 °C and an average particle diameter of 100 nm, produced by Unitika Ltd.

R 3370: being VONCOAT R 3370, an anionic modified acrylic resin, exhibiting a Tg of 20 °C and an average particle diameter of 126 nm, produced by Dainippon Ink and Chemicals, Inc.

### Ink-jet Image Recording and Evaluation

Employing Ink Sets 6 - 14 prepared as above and Ink Set 1 prepared as in Example 1, ink-jet image recording was conducted in the same manner as for Example 1, to obtain Recorded Images 201 - 220. Subsequently, the formed images were evaluated with the same method as for Example 1, with respect to the untreated recorded images and treated ones at 36 °C and 80% RH. The obtained results are shown in Table 2.

**Table 2**

| Recorded Image No. | Ink Set | | | | Recording Medium | | *3 | Untreated image | | *1 | | Remarks |
|---|---|---|---|---|---|---|---|---|---|---|---|---|
| | No. | *2 | Microscopic resin particles Tg (°C) | | No. | Film surface pH | | Ozone fading resistance 1 | Image Clarity 1 C value | Ozone fading resistance 2 | Image Clarity 2 C value | |
| | | | Name | Tg (°C) | | | | | | | | |
| 201 | 1 | 9.0 | SX1105A | 0 | 1 | 4.5 | 4.5 | 100 | 42 | 105 | 44 | Comp. |
| 202 | 1 | 9.0 | SX1105A | 0 | 3 | 5.2 | 3.8 | 144 | 77 | 157 | 81 | Inv. |
| 203 | 6 | 9.0 | SF300 | -42 | 1 | 4.5 | 4.5 | 183 | 74 | 41 | 40 | Comp. |
| 204 | 6 | 9.0 | SF300 | -42 | 3 | 5.2 | 3.8 | 200 | 90 | 155 | 78 | Inv. |
| 205 | 7 | 9.0 | SR110 | -27 | 1 | 4.5 | 4.5 | 160 | 71 | 82 | 46 | Comp. |
| 206 | 7 | 9.0 | SR110 | -27 | 3 | 5.2 | 3.8 | 181 | 87 | 147 | 80 | Inv. |
| 207 | 8 | 9.0 | A2510 | -19 | 1 | 4.5 | 4.5 | 149 | 64 | 99 | 51 | Comp. |
| 208 | 8 | 9.0 | A2510 | -19 | 3 | 5.2 | 3.8 | 171 | 86 | 150 | 82 | Inv. |
| 209 | 9 | 9.0 | SR108 | -9 | 1 | 4.5 | 4.5 | 122 | 55 | 106 | 49 | Comp. |
| 210 | 9 | 9.0 | SR108 | -9 | 3 | 5.2 | 3.8 | 158 | 82 | 161 | 83 | Inv. |
| 211 | 10 | 9.0 | SR130 | -6 | 1 | 4.5 | 4.5 | 90 | 50 | 80 | 50 | Comp. |
| 212 | 10 | 9.0 | SR130 | -6 | 3 | 5.2 | 3.8 | 100 | 70 | 100 | 70 | Inv. |
| 213 | 11 | 9.0 | Joncryl 711 | 0 | 1 | 4.5 | 4.5 | 95 | 43 | 102 | 47 | Comp. |
| 214 | 11 | 9.0 | Joncryl 711 | 0 | 3 | 5.2 | 3.8 | 142 | 75 | 160 | 83 | Inv. |
| 215 | 12 | 9.0 | P6030 | 10 | 1 | 4.5 | 4.5 | 73 | 42 | 76 | 45 | Comp. |
| 216 | 12 | 9.0 | P6030 | 10 | 3 | 5.2 | 3.8 | 137 | 74 | 155 | 81 | Inv. |
| 217 | 13 | 9.0 | KT8701 | 14 | 1 | 4.5 | 4.5 | 62 | 40 | 73 | 43 | Comp. |
| 218 | 13 | 9.0 | KT8701 | 14 | 3 | 5.2 | 3.8 | 132 | 73 | 150 | 79 | Inv. |
| 219 | 14 | 9.0 | R3370 | 20 | 1 | 4.5 | 4.5 | 40 | 38 | 55 | 38 | Comp. |
| 220 | 14 | 9.0 | R3370 | 20 | 3 | 5.2 | 3.8 | 120 | 71 | 140 | 76 | Inv. |

| | | | | | | | | | | | | |
|---|---|---|---|---|---|---|---|---|---|---|---|---|
| *1: Treated image under high temperature and high humidity, *2: pH of Ink solution *3: pH difference between Ink solution and Recording Medium Comp.: Compatible example, Inv.: This invention | | | | | | | | | | | | |

As is apparent from Table 2, by employment of microscopic resin particles or anionic modified microscopic resin particles exhibiting a Tg of -30 to 10 °C, both the initial filming capability contributing to ozone fading resistance and image clarity (being tactile sense of glossiness) and suppression of film layer disruption during long term storage under an ambience of high temperature and high humidity were obtained, and even after the recording materials in storage were treated under high temperature and high humidity, the desired characteristics of ozone fading and image clarity were excellent.

### Example 3

### Preparation of Ink-jet Recording Medium

### Preparation of Recording Medium 7

### Preparation of Outermost Layer Coating Composition 1

Silica Dispersion Liquid 3 was prepared in the same manner as Silica Dispersion Liquid 1 described in Example 1, except that Cationic Polymer (P-1) was omitted. An aqueous solution containing this Silica Dispersion Liquid 3 at a solid content of 2%, polyvinyl alcohol (being PVP235, produced by Kuraray Co., Ltd.) at a solid content of 0.2%, and a surface active agent (being Olfine E1010, produced by Nisshin Chemical Industry Co., Ltd.) of 0.3% as an active ingredient, was prepared, and was designated as Outermost Layer Coating Composition 1.

### Preparation of Recording Medium

Onto the 4th layer of the ink absorptive layer of Recording Medium 1 described in Example 1, pure water was provided to fill the voids with water, after which Outermost Layer Coating Composition 1, prepared as above, was applied employing a wire-bar method so that the solid content became 1.0 g/m² (thickness being 2.1 µm equivalent), and dried. Then, a heat treatment at 40 °C for 24 hours was conducted.

At the same time, Recording Medium 7 was prepared in the same manner as Recording Medium 3, except that the pH of Outermost Layer Coating Composition 1 was adjusted to 5.1 (at 25 °C), while also appropriately adjusting the mole ratio of boric acid/borax.

### Preparation of Recording Medium 8

Subsequently, Outermost Layer Coating Composition 2 was prepared in the same manner as Outermost Layer Coating Composition 1 employed in preparation for above Recording Medium 7, except that the solid content of Silica Dispersion Liquid 3 was changed to 4%, the solid content of polyvinyl alcohol was changed to 0.4%, and an active ingredient of the surface active agent was changed to 0.6%.

Subsequently, onto the 4th layer of the ink absorptive layer of Recording Medium 1 described in Example 1, pure water was provided to fill the voids with water, after which Outermost Layer Coating Composition 2 as prepared above was applied employing a wire-bar method so that the solid content became 1.9 g/m² (thickness being 4.2 µm equivalent), and dried. Then, a heat treatment at 40 °C for 24 hours was conducted.

Following that, Recording Medium 8 was prepared in the same manner as Recording Medium 3, except that the pH of Outermost Layer Coating Composition 2 was adjusted to 5.1 (at 25 °C), followed by appropriately adjusting the mole ratio of boric acid/borax.

### Preparation of Recording Medium 9

Outermost Layer Coating Composition 3 was prepared in the same manner as Outermost Layer Coating Composition 1 employed in preparation for above Recording Medium 7, except that the solid content of Silica Dispersion Liquid 3 was changed to 8%, the solid content of polyvinyl alcohol was changed to 0.8%, and the active ingredient of the surface active agent was changed to 1.2%.

Subsequently, onto the 4th layer of the ink absorptive layer of Recording Medium 1 described in Example 1, pure water was provided to fill the voids with water, after which Outermost Layer Coating Composition 3, prepared as above, was applied employing a wire-bar method so that the solid content became 3.8 g/m² (thickness being 8.3 µm equivalent), and dried, after which a heat treatment at 40 °C for 24 hours was conducted.

Further, Recording Medium 9 was prepared in the same manner as Recording Medium 3, except that the pH of Outermost Layer Coating Composition 3 was adjusted to 5.1 (at 25 °C), by appropriately adjusting the mole ratio of boric acid/borax.

### Preparation of Recording Medium 10

Outermost Layer Coating Composition 4 was prepared in the same manner as Outermost Layer Coating Composition 1 employed in preparation for above Recording Medium 7, except that the solid content of Silica Dispersion Liquid 3 was changed to 10%, the solid content of polyvinyl alcohol was changed to 1.0%, and the active ingredient of the surface active agent was changed to 1.5%.

Subsequently, onto the 4th layer of the ink absorptive layer of Recording Medium 1 described in Example 1, pure water was provided to fill the voids with water, after which Outermost Layer Coating Composition 4 prepared as above was applied employing a wire-bar method so that the solid content became 5.7 g/m² (thickness being 12.5 µm equivalent), and dried. Then, a heat treatment at 40 °C for 24 hours was conducted.

Recording Medium 10 was prepared in the same manner as Recording Medium 3, except that the pH of Outermost Layer Coating Composition 4 was adjusted to 5.1 (at 25 °C), by appropriately adjusting the mole ratio of boric acid/borax. Preparation of Recording Medium 11

### Preparation of Outermost Layer Coating Composition 5

An aqueous solution containing a cationic colloidal silica (being Snowtex AK-M, exhibiting an average particle diameter of 22 nm, produced by Nissan Chemical Indusries, Ltd.) of 10% as the solid content, and a surface active agent (being Olfine E 1010, produced by Nisshin Chemical Industry Co., Ltd.) of 0.3% as the active ingredient, was prepared, and was designated as Outermost Layer Coating Composition 5. Preparation of Recording Medium

Onto the 4th layer of the ink absorptive layers of Recording Medium 1 described in Example 1, Outermost Layer Coating Composition 5 was applied employing a slot nozzle spray apparatus, described in Figs. 1 - 7 of JP-A 2004-106378, so that the solid content became 0.5 g/m² (thickness being 0.4 µm equivalent), and dried. A heat treatment at 40 °C for 24 hours was then conducted.

Further, Recording Medium 11 was prepared in the same manner as Recording Medium 3, except that the pH of Outermost Layer Coating Composition 4 was adjusted to 5.1 (at 25 °C), by appropriately adjusting the mole ratio of boric acid/borax.

### Ink-jet Image Recording and Evaluation

Recorded Images 301 - 312 were prepared combining Recording Media 7 - 11 and Recording Media 1 and 3 prepared in Example 1, with Ink Sets 1 and 4 prepared in Example 1, as described in Table 3.

Subsequently, regarding each formed image, evaluation of image clarity was conducted in the same manner as described in Example 1, and also evaluation of ink absorbability and coloring property was conducted based on the following methods.

### Evaluation of Ink Absorbability

Employing an ink-jet recording apparatus described in Fig. 1, under an ambience of 27 °C and 80% RH, seven inks were ejected, the inks being, Yellow Ink (Y), Magenta Ink (M), Cyan Ink (C), and Black Ink (K), as dark inks; Light Magenta Ink (Lm) and Light Cyan Ink (Lc) as light inks; and a clear ink. And also employing an algorithm so that the total amount of provided ink was 17 g/m², a blue gradation image, a green gradation image, a red gradation image, and a black gradation image were formed in complex with each ink, ejecting the color inks of the yellow ink, each magenta ink, each cyan ink, and the clear ink simultaneously.
Each gradation image prepared as above was visually observed, and based on the following criteria, ink absorbability was evaluated.
A: There was no density mottling due to overflow of the ink, resulting in a uniform image.
B: In certain density regions, slight density mottling was observed, but the image appeared nearly uniform.
C: Slight density mottling was observed in a few portions, but it was commercially acceptable.
D: Heavy density mottling and uneven gloss were observed in all regions of the color image, so that the image was not commercially viable.

### Evaluation of Coloring Property

Employing the ink-jet recording apparatus described in Fig. 1, the dark inks of Yellow Ink (Y), Magenta Ink (M), Cyan Ink (C), and Clear Ink were ejected simultaneously, whereby a gray colored patch was prepared. At this time, gray density (measured by X-rite 983) compared to an implanted dot number of each ink per unit area was plotted, and the density value of saturated gray density was determined. The saturated gray density of Recorded Image 301 was set 100, and the relative saturated gray density of each compared Recorded Image was determined, and this density value was used as a measure of coloring property.

The obtained results from the above evaluation are shown in Table 3.

**Table 3**

| Recorded Image No. | Ink Set | | Recording Medium | | *1 | *2 | Image Clarity 1 C value | Ink Absorbability | Coloring property | Remarks |
|---|---|---|---|---|---|---|---|---|---|---|
| | No. | pH of Ink solution | No. | Film surface pH | | | | | | |
| 301 | 1 | 9.0 | 1 | 4.5 | 4.5 | - | 42 | D | 100 | Comp. |
| 302 | 1 | 9.0 | 3 | 5.2 | 3.8 | - | 77 | C | 107 | Inv. |
| 303 | 1 | 9.0 | 7 | 5.2 | 3.8 | 2.1 | 90 | B | 137 | Inv. |
| 304 | 1 | 9.0 | 8 | 5.2 | 3.8 | 4.2 | 89 | B | 128 | Inv. |
| 305 | 1 | 9.0 | 9 | 5.2 | 3.8 | 8.3 | 92 | B | 111 | Inv. |
| 306 | 1 | 9.0 | 10 | 5.2 | 3.8 | 12.5 | 84 | B | 105 | Inv. |
| 307 | 1 | 9.0 | 11 | 5.1 | 3.9 | 0.4 | 100 | A | 141 | Inv. |
| 308 | 4 | 10.5 | 7 | 5.2 | 5.3 | 2.1 | 48 | D | 85 | Comp. |
| 309 | 4 | 10.5 | 8 | 5.2 | 5.3 | 4.2 | 48 | D | 80 | Comp. |
| 310 | 4 | 10.5 | 9 | 5.2 | 5.3 | 8.3 | 51 | D | 79 | Comp. |
| 311 | 4 | 10.5 | 10 | 5.2 | 5.3 | 12.5 | 53 | D | 72 | Comp. |
| 312 | 4 | 10.5 | 11 | 5.1 | 5.4 | 0.4 | 60 | D | 96 | Comp. |

| | | | | | | | | | | |
|---|---|---|---|---|---|---|---|---|---|---|
| *1: pH difference between Ink solution and Recording Medium *2: Thickness of Non-moldanting Layer (Outermost Layer) (µm) Comp.: Compatible example, Inv.: This invention | | | | | | | | | | |

AS is apparent from the results shown in Table 3, the recording materials of this invention formed by combination of the ink set consisting of the compositions defined in this invention and of the recording medium of this invention, exhibit superiority in image clarity, ink absorbability, and coloring property, compared to the comparative examples. Of these, by specifically employing the recording medium provided with a non-mordanting layer as the outermost layer, the above targeted effects are markedly achieved.

## Claims

1. A method of forming an ink-jet image comprising the steps of:
i. ejecting ink compositions from an ink-jet head onto an ink-jet recording medium; and
ii. forming an image,
wherein a) the ink-jet recording medium is a porous type recording medium which has at least one layer of a porous ink absorbing layer on a non-water absorptive support,
b) the ink-jet head has a plurality of nozzles which eject more than two ink compositions respectively, and at least one ink composition is a clear ink containing substantially no coloring agent, and also at least one ink composition is a color ink containing a coloring agent,
c) the clear ink contains water dispersible microscopic resin particles having an average diameter of not less than 10 nm and not more than 200 nm in an amount of not less than 1 weight%, and
d) pH of the ink compositions is not less than 6.5 and not more than 11.0, and also an absolute value of a difference, between pH of the ink compositions and film surface pH of the ink-jet recording medium, is less than 4.0.

2. The method of forming an ink-jet image of claim 1, wherein a glass transition temperature Tg of microscopic resin particles contained in the clear ink is not less than - 30 °C and not more than 10 ° C.

3. The method of forming an ink-jet image of claim 1 or 2, wherein the microscopic resin particles are of an anion modified latex.

4. The method of forming an ink-jet image of any one of claims 1 - 3, wherein thickness of the an outermost layer which is located at the position farthest from the non-water absorptive support is not more than 10.0 µm, and the outermost layer is a non-mordant layer containing substantially no mordant.

5. The method of forming an ink-jet image of claim 4, wherein the outermost layer contains colloidal silica exhibiting an average diameter of the particles of not less than 10 nm and not more than 100 nm.
